# EUROPEAN PATENT APPLICATION

(11) **EP 4 108 705 A1**
(43) Date of publication of application: **28.12.2022**
(21) Application number: 21757470.6
(22) Date of filing: 17.02.2021
(51) Int. Cl.: C08G 75/08

(54) **METHOD FOR PRODUCING POLYTHIOETHER COMPOUND**

(30) Priority: 19.02.2020 CN 202010101345
(71) Applicant: Daicel Corporation, Osaka 530-0011 (JP)
(72) Inventor: SAKANE, Masanori, Tokyo 108-8230 (JP); KITAYAMA, Kenji, Tokyo 108-8230 (JP); LIU, Bing, Shanghai 200131 (CN)
(74) Representative: Grünecker Patent- und Rechtsanwälte PartG mbB
(86) International application number: PCT/JP2021/005900
(87) International publication number: WO 2021/166952

(57) **Abstract**

It is an object of the present disclosure to provide a method for efficiently and economically producing a polythioether compound by performing a ring-opening polymerization of an alicyclic episulfide compound.

The present disclosure provides a method for producing a polythioether compound, the method including performing a ring-opening polymerization of an alicyclic episulfide compound in the presence of a base. The base is preferably an amine compound. Further, the base is preferably a strong base.

## Description

### Technical Field

The present disclosure relates to a method for producing a polythioether compound. More specifically, the present disclosure relates to a method for producing a polythioether compound by performing a ring-opening polymerization of an alicyclic episulfide compound. The present application claims priority to Chinese Patent Application No. 202010101345.1 filed in China on February 19, 2020, the content of which is incorporated herein.

### Background Art

Plastics are widely used as various optical materials such as spectacle lenses, camera lenses, optical fiber cables, prisms, substrates for information recording, and filters, because the plastics are resistant to crack and are easily colored, compared to glass. When plastics are used for optical materials, particularly for spectacle lenses, optical characteristics required include a high refraction index for reduction in the lens thickness, and a high Abbe number for reduction in chromatic aberration. However, typical resins exhibit optical characteristics where the Abbe number tends to decrease as the refraction index increases. There is an intense effort to develop a plastic lens material that achieves both a high refraction index and a high Abbe number.

A method for incorporating a compound having sulfur atoms with high atomic refraction and relatively low dispersion (sulfur-containing compound) into a resin composition has been recently investigated to improve the refractive index and the Abbe number in a well-balanced manner. For example, Patent Document 1 has reported a thiourethane resin formed by reacting a polythiol compound as a sulfur-containing compound with a polyisocyanate compound, and Patent Documents 2 and 3 have reported resin materials containing a sulfur-containing compound, such as an episulfide resin formed by curing and polymerizing a linear alkyl sulfide type episulfide compound as a sulfur-containing compound.

The thiourethane resin described in Patent Document 1 exhibits a high refractive index of approximately 1.60 when xylylene diisocyanates is used as the polyisocyanate to be reacted with the polythiol compound, whereas the Abbe number of the thiourethane resin decreases due to the influence of the aromatic ring of the xylylene group. Thus, a rainbow is created by chromatic aberration. In the episulfide resins described in Patent Documents 2 and 3, the linear alkyl sulfide type episulfide compound, i.e., the sulfur-containing compound, has a high sulfur concentration, and thus the cured product having a very high refractive index of approximately 1.7 is formed. However, the Abbe number is approximately 35, the optical characteristics are not well balanced. Thus, the episulfide resin is limited to use as an additive for adjusting the refractive index.

Meanwhile, Patent Document 4 describes that a cured product of the curable episulfide resin composition containing, as a sulfur-containing compound, an episulfide compound having an alicyclic structure in the molecule (may be hereinafter referred to as "alicyclic episulfide compound") has excellent optical characteristics with a good balance between high refraction index and high Abbe number, because the cured product has an optimized concentration of sulfur and an alicyclic structure.

It is difficult to control the reaction of the alicyclic episulfide compound of Patent Document 4, and there is a problem in that side reactions such as oxidation and desulfurization readily proceed. According to the research by the inventors of the present application, it has been found that when an acid generating agent widely used as a polymerization initiator of an epoxy compound is used as a catalyst, the reaction rate of the ring-opening polymerization reaction of the alicyclic episulfide compound is so fast that it is difficult to control the reaction.

Non-Patent Literature 1 discloses a method for producing a polythioether compound by performing a ring-opening polymerization reaction on a (9-carbazolylmethyl)thiirane compound which is a linear alkyl sulfide type episulfide compound, using an initiator: a thiol compound and a catalyst: 1,5,7-triazabicyclo[4.4.0]deca-5-ene (TBD).

### Citation List

### Patent Document

Patent Document 1: JP S60-199016 A
Patent Document 2: JP H09-110979 A
Patent Document 3: JP H10-298287 A
Patent Document 4: JP 2019-008289 A

### Non-Patent Literature

Non-Patent Literature 1: European Polymer Journal, 117 (2019) 179-187

### Summary of Invention

### Technical Problem

Non-Patent Literature 1 does not disclose ring-opening polymerization using the alicyclic episulfide compound. In addition, a considerable amount of solvent: tetrahydrofuran (THF) or dimethylformamide (DMF) is used. Furthermore, a stoichiometric amount of TBD, which is expensive, is used with the thiol compound. These are problematic in industrial applications.

Therefore, an object of the present disclosure is to provide a method for efficiently and economically producing a polythioether compound by performing a ring-opening polymerization of an alicyclic episulfide compound.

Another object of the present disclosure is to provide a curable composition containing the polythioether compound produced by the above method.

### Solution to Problem

As a result of diligent research to solve the problems described above, the inventors of the present disclosure have found that, when an alicyclic episulfide compound is reacted in the presence of a base, the ring-opening polymerization reaction of the alicyclic episulfide compound is easily controlled, and a polythioether compound can be produced efficiently and economically. In addition, it has been found that the produced polythioether compound is useful as a component of a curable composition exhibiting a high refraction index and a high Abbe number. The invention of the present disclosure was completed based on these findings.

Hence, the present disclosure provides a method for producing a polythioether compound, the method including performing a ring-opening polymerization of an alicyclic episulfide compound in a presence of a base.

In the method for producing a polythioether compound, the ring-opening polymerization may be performed in an absence of a solvent.

In the method for producing a polythioether compound, the ring-opening polymerization may be performed at a reaction temperature of 30°C or higher.

In the method for producing a polythioether compound, the base may be an amine compound.

In the method for producing a polythioether compound, the base is preferably a strong base.

In the method for producing a polythioether compound, the ring-opening polymerization may further proceed in a presence of a thiol compound.

In the method for producing a polythioether compound, the base may be used in a proportion of 0.001 equivalent or greater and less than 1 equivalent per equivalent of thiol group contained in the thiol compound.

In the method for producing a polythioether compound, the thiol compound may be a compound having two or more thiol groups in a molecule.

In the method for producing a polythioether compound, the alicyclic episulfide compound may include a compound represented by Formula (I) below: 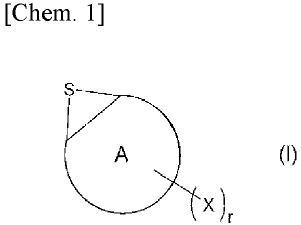 in Formula (I), X represents a monovalent organic group; the ring A represents an alicyclic ring having from 3 to 10 carbons; r represents a natural number; provided that the upper limit of r is the number of hydrogen atoms that may be present when ring A does not have X; and when r is 2 or greater, 2 or more of Xs may be identical or different.

The present disclosure also provides a curable composition containing a polythioether compound produced by the method described above.

In the curable composition, the polythioether compound may have a structure represented by Formula (II) below: 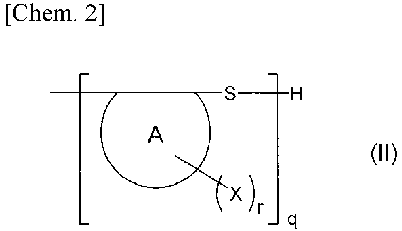 in Formula (II), X represents a monovalent organic group; the ring A represents an alicyclic ring having from 3 to 10 carbons; r represents a natural number; provided that the upper limit of r is the number of hydrogen atoms that may be present when ring A does not have X; when r is 2 or greater, 2 or more of Xs may be identical or different; q represents a natural number of 1 or greater; and X and r in a group in a square bracket may be identical or different when q is 2 or greater.

The curable composition may be a resin composition for an optical lens.

The curable composition may be a resin composition for a spectacle lens.

The present disclosure also provides a cured product of the curable composition.

The present disclosure also provides an optical lens molded from the cured product of the curable composition.

The present disclosure also provides a spectacle lens molded from the cured product of the curable composition.

### Advantageous Effects of Invention

According to the method of the present disclosure, the ring-opening polymerization reaction of the alicyclic episulfide compound is easily controlled, and a polythioether compound can be produced efficiently and economically. The produced polythioether compound is useful as a component of a curable composition for producing a cured product having excellent optical characteristics with a good balance between high refraction index and high Abbe number.

### Brief Description of Drawings

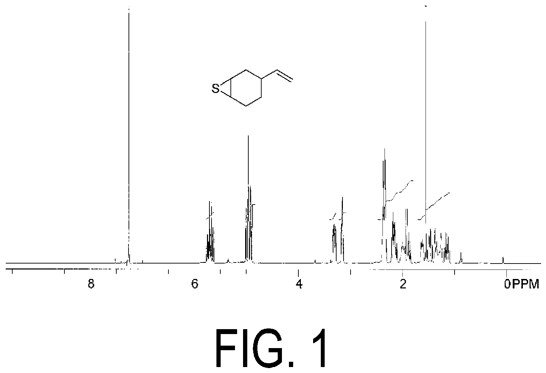

FIG. 1 is a chart of a ¹H-NMR spectrum of an alicyclic episulfide compound formed in Synthesis Example 1.

### Description of Embodiments

### Method for Producing Polythioether Compound

The method for producing a polythioether compound of the present disclosure includes performing a ring-opening polymerization of an alicyclic episulfide compound in a presence of a base. The method for producing a polythioether compound of the present disclosure may be performed under coexistence of a base and another component such as a thiol compound described below.

### Alicyclic Episulfide Compound

The alicyclic episulfide compound used in the present disclosure is a compound having at least one alicyclic episulfide group (an episulfide group containing a sulfur atom and two adjacent carbon atoms which constitute an alicyclic ring) in a molecule. The number of alicyclic episulfide groups in the alicyclic episulfide compound is not particularly limited as long as it is 1 or greater, but is preferably 1 or 2, and more preferably 1 from the viewpoint of reactivity in the ring-opening polymerization.

The alicyclic ring (aliphatic hydrocarbon ring) of the alicyclic episulfide compound is not particularly limited, and examples thereof include 3-10 membered cycloalkanes, such as cyclopropane, cyclobutane, cyclopentane, cyclohexane, and cycloheptane, and cyclooctane; and bridged hydrocarbon rings such as a norbornane ring, an adamantane ring, and a tricyclo[5.2.1.0^{2,6}]decane ring. From the viewpoint of reactivity in ring-opening polymerization, 5- or 6-membered cycloalkanes are preferred.

Specific examples of the alicyclic episulfide compound include a compound represented by Formula (I) below: 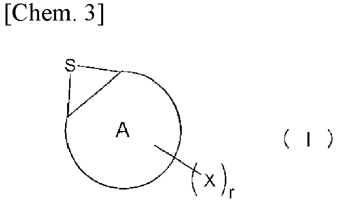 in Formula (I), X represents a monovalent organic group. Examples of the monovalent organic group include a hydrocarbon group (monovalent hydrocarbon group), alkoxy groups, alkenyloxy groups, aryloxy groups, aralkyloxy groups, acyloxy groups, alkylthio groups, alkenylthio groups, arylthio groups, aralkylthio groups, carboxyl groups, alkoxycarbonyl groups, aryloxycarbonyl groups, aralkyloxycarbonyl groups, glycidyl groups, epoxy groups, episulfide groups, cyano groups, isocyanate groups, carbamoyl groups, isothiocyanate groups, and groups in which these groups are bonded to a linking group described later (a divalent group having one or more atoms). Note that a substituent such as an alkyl group may be bonded to one or more carbon atoms constituting the alicyclic ring in Formula (I).

Examples of the hydrocarbon group include an aliphatic hydrocarbon group, an alicyclic hydrocarbon group, an aromatic hydrocarbon group, and a group in which two or more of those listed above are bonded.

Examples of the aliphatic hydrocarbon group include an alkyl group, an alkenyl group, and an alkynyl group. Examples of the alkyl group include a C₁₋₂₀ alkyl group, such as a methyl group, an ethyl group, a propyl group, an isopropyl group, a butyl group, a hexyl group, an octyl group, an isooctyl group, a decyl group, and a dodecyl group. Examples of the alkenyl group include a C₂₋₂₀ alkenyl group, such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, and a 5-hexenyl group. Examples of the alkynyl group include a C₂₋₂₀ alkynyl group, such as an ethynyl group and a propynyl group.

Examples of the alicyclic hydrocarbon group include: a C₃₋₁₂ cycloalkyl group, such as a cyclopropyl group, a cyclobutyl group, a cyclopentyl group, a cyclohexyl group, and a cyclododecyl group; a C₃₋₁₂ cycloalkenyl group, such as a cyclohexenyl group; and a C₄₋₁₅ bridged cyclic hydrocarbon group, such as a bicycloheptanyl group and a bicycloheptenyl group.

Examples of the aromatic hydrocarbon group include a C₆₋₁₄ aryl group (e.g., a C₆₋₁₀ aryl group), such as a phenyl group and a naphthyl group.

Furthermore, examples of the group in which an aliphatic hydrocarbon group and an alicyclic hydrocarbon group are bonded include a cyclohexylmethyl group and a methylcyclohexyl group. Examples of the group in which an aliphatic hydrocarbon group and an aromatic hydrocarbon group are bonded include a C₇₋₁₈ aralkyl group, such as a benzyl group and a phenethyl group; a C₆₋₁₀ aryl-C₂₋₆ alkenyl group, such as a cinnamyl group; a C₁₋₄ alkyl-substituted aryl group, such as a tolyl group; and a C₂₋₄ alkenyl-substituted aryl group, such as a styryl group.

The hydrocarbon group may have a substituent. The number of carbon atoms of the substituent in the hydrocarbon group is not particularly limited, but is preferably from 0 to 20, and more preferably from 0 to 10. Examples of the substituent include halogen atoms such as a fluorine atom, a chlorine atom, a bromine atom, and an iodine atom; a hydroxyl group; an alkoxy group (e.g., a C₁₋₆ alkoxy group) such as a methoxy group, an ethoxy group, a propoxy group, an isopropyloxy group, a butoxy group, and an isobutyloxy group; an alkenyloxy group (e.g., a C₂₋₆ alkenyloxy group) such as an allyloxy group; an aryloxy group (e.g., a C₆₋₁₄ aryloxy group) that may have a substituent such as a C₁₋₄ alkyl group, a C₂₋₄ alkenyl group, a halogen atom, or a C₁₋₄ alkoxy group on an aromatic ring, such as a phenoxy group, a tolyloxy group, or a naphthyloxy group; an aralkyloxy group (e.g., a C₇₋₁₈ aralkyloxy group) such as a benzyloxy group and a phenethyloxy group; an acyloxy group (e.g., a C₁₋₁₂ acyloxy group) such as an acetyloxy group, a propionyloxy group, a (meth)acryloyloxy group, and a benzoyloxy group; a mercapto group; an alkylthio group (e.g., a C₁₋₆ alkylthio group) such as a methylthio group and an ethylthio group; an alkenylthio group (e.g., a C₂₋₆ alkenylthio group) such as an allylthio group; an arylthio group (e.g., a C₆₋₁₄ arylthio group) that may have a substituent such as a C₁₋₄ alkyl group, a C₂₋₄ alkenyl group, a halogen atom, or a C₁₋₄ alkoxy group on an aromatic ring, such as a phenylthio group, a tolylthio group, or a naphthylthio group; an aralkylthio group (e.g., a C₇₋₁₈ aralkylthio group) such as a benzylthio group and a phenethylthio group; a carboxyl group; an alkoxycarbonyl group (e.g., a C₁₋₆ alkoxycarbonyl group) such as a methoxycarbonyl group, an ethoxycarbonyl group, a propoxycarbonyl group, or a butoxycarbonyl group; an aryloxycarbonyl group (e.g., a C₆₋₁₄ aryloxycarbonyl group) such as a phenoxycarbonyl group, a tolyloxycarbonyl group, and a naphthyloxycarbonyl group; an aralkyloxycarbonyl group (e.g., a C₇₋₁₈ aralkyloxycarbonyl group) such as a benzyloxycarbonyl group; an amino group; a mono- or di-alkylamino group (e.g., a mono- or di- C₁₋₆ alkylamino group) such as a methylamino group, an ethylamino group, a dimethylamino group, and a diethylamino group; an acylamino group (e.g., a C₁₋₁₁ acylamino group) such as an acetylamino group, a propionylamino group, and a benzoylamino group; an epoxy group-containing group such as an epoxy group, a glycidyl group, a glycidyloxy group, and a cyclohexene oxide group; an episulfide group-containing group such as an episulfide group, a 2,3-episulfide propyl group, a 2,3-episulfide propyloxy group, and an episulfide cyclohexyl group; an oxetanyl group-containing group such as an ethyloxetanyloxy group; an acyl group such as an acetyl group, a propionyl group, and a benzoyl group; an oxo group; and a group in which two or more of these are bonded via a C₁₋₆ alkylene group as necessary.

In Formula (I) above, ring A represents an alicyclic ring having from 3 to 10 carbons, and examples thereof includes 3-10 membered cycloalkanes such as cyclopropane, cyclobutane, cyclopentane, cyclohexane, cycloheptane, and cyclooctane.

In Formula (I) above, r represents a natural number (an integer of 0 or greater) provided that the upper limit of r is the number of hydrogen atoms that may be present when ring A does not have X. For example, r represents a natural number of 0 to 8 when ring A is cyclopentane, and r represents a natural number of 0 to 10 when ring A is cyclohexane.

When r is 2 or greater, 2 or more of Xs may be identical or different.

As a preferred aspect of X in Formula (I) above, an aliphatic hydrocarbon group is preferred, a C₂₋₂₀ alkenyl group is more preferred, and a vinyl group is still more preferred. That is, the alicyclic episulfide compound is preferably a compound in which at least one of Xs includes a vinyl group, and a specifically preferred example is a compound represented by Formula (I-1) below: 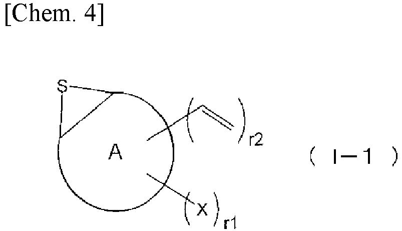
in Formula (I-1), X and ring A are synonymous with Formula (I);
in Formula (I-1), r1 represents a natural number (an integer of 0 or greater), and r2 represents a natural number of 1 or greater (an integer of 1 or greater) provided that the upper limit of the sum of r1 and r2 is the number of hydrogen atoms that may be present when ring A does not have X.

The alicyclic episulfide compound is not particularly limited. Particularly, a compound having an episulfide cyclohexyl group (an episulfide group containing a sulfur atom and two adjacent carbon atoms which constitute a cyclohexane ring) is preferred from the viewpoint of reactivity of ring-opening polymerization. That is, as the alicyclic episulfide compound, a compound having one or more episulfide cyclohexyl groups in the molecule is preferred. Specifically, a compound represented by Formula (1) below is preferred, and a compound represented by Formula (1-1) below is more preferred, and a compound represented by Formula (1-2) below is further preferred: 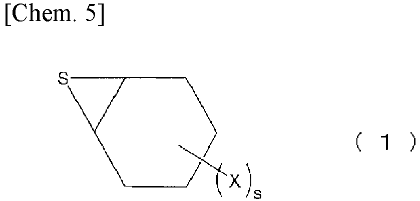 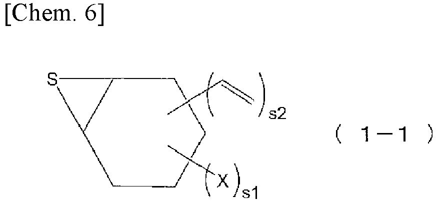 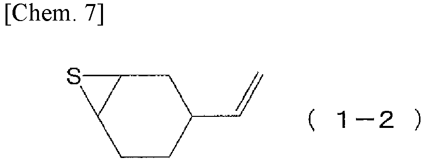
in Formula (1), X in Formula (1-1) is a monovalent organic group, similarly to Formula (1);
s represents a natural number of 0 to 10;
s1 represents a natural number of 0 to 9; and s2 represents a natural number of 1 or greater provided that the upper limit of the sum of s1 and s2 is 10.

From the viewpoint of the reactivity in ring-opening polymerization, as a preferred aspect of the compound represented by Formula (1) above, a compound represented by Formula (2) below is also preferred: 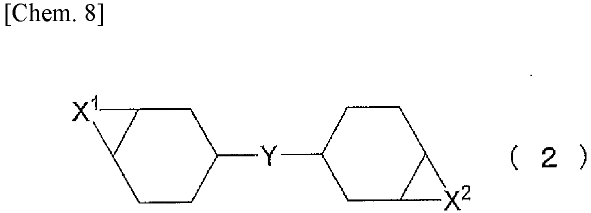 in Formula (2), Y represents a single bond or a linking group, namely a divalent group having one or more atoms. Examples of the linking group include a divalent hydrocarbon group, an alkenylene group in which some or all of the carbon-carbon double bonds are episulfidized, a carbonyl group (-CO-), an ether bond (-O-), an ester bond (-COO-), an amide group (-CONH-), a carbonate group (-OCOO-), a sulfonyl group (-SO₂-), and a group in which a plurality of the above groups is linked. Note that substituents such as alkyl groups may be bonded to one or more carbon atoms constituting the alicyclic ring in Formula (2).

In Formula (2), X¹ and X² are each independently an oxygen atom or a sulfur atom, and at least one (preferably two) of X¹ or X² is/are a sulfur atom. Note that substituents such as alkyl groups may be bonded to one or more carbon atoms constituting the alicyclic ring in Formula (2).

The compound represented by Formula (2) above is preferably a compound represented by Formula (2-1) below:

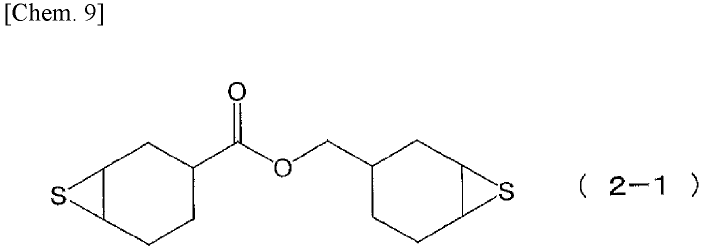

Examples of the alicyclic episulfide compound in which Y in Formula (2) is a single bond include a compound represented by Formula (2a) below: 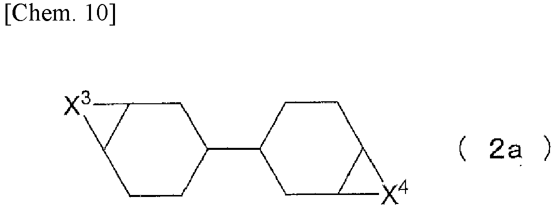 in Formula (2a) above, X³ and X⁴ are each independently an oxygen atom or a sulfur atom, and at least one (preferably two) of X³ or X⁴ is/are a sulfur atom. Note that substituents such as alkyl groups may be bonded to one or more carbon atoms constituting the alicyclic ring in Formula (2a).

Examples of the divalent hydrocarbon group include linear or branched alkylene groups having from 1 to 18 carbons and divalent alicyclic hydrocarbon groups. Examples of the linear or branched alkylene group having from 1 to 18 carbons include a methylene group, a methyl methylene group, a dimethyl methylene group, an ethylene group, a propylene group, and a trimethylene group. Examples of the divalent alicyclic hydrocarbon group include a divalent cycloalkylene group (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the alkenylene group in which some or all of the carbon-carbon double bonds are episulfidized or epoxidized (which may be referred to as "episulfidized alkenylene group") include linear or branched alkenylene groups having from 2 to 8 carbons (including an alkapolyenylene group), such as a vinylene group, a propenylene group, a 1-butenylene group, a 2-butenylene group, a butadienylene group, a pentenylene group, a hexenylene group, a heptenylene group, and an octenylene group. The episulfidized alkenylene group is preferably an alkenylene group in which all of carbon-carbon double bonds are episulfidized or epoxidized, and more preferably an alkenylene group having from 2 to 4 carbons in which all of carbon-carbon double bonds are episulfidized or epoxidized.

The linking group Y, preferably a linking group containing an oxygen atom, and specifically, examples thereof include -CO-, -O-CO-O-, -COO-, -O-, -CONH-, a group in which a plurality of these groups is linked, and a group in which one or two or more of these groups and one or two or more divalent hydrocarbon groups are linked. Examples of the divalent hydrocarbon group include those exemplified above.

Representative examples of the alicyclic episulfide compound represented by Formula (2) include 2,2-bis(3,4-episulfide cyclohexane-1-yl)propane, 2-(3,4-episulfide cyclohexane-1-yl)-2-(3,4-epoxy cyclohexane-1-yl)propane, bis(3,4-episulfide cyclohexylmethyl)ether, (3,4-episulfide cyclohexylmethyl) (3,4-epoxycyclohexylmethyl)ether, 1,2-bis(3,4-episulfide cyclohexane-1-yl)ethane, 1-(3,4-episulfide cyclohexane-1-yl)-2-(3,4-epoxy cyclohexane-1-yl)ethane, 1,2-episulfide-1,2-bis(3,4-episulfide cyclohexane-1-yl)ethane, 1,2-epoxy-1,2-bis(3,4-episulfide cyclohexane-1-yl)ethane, 1,2-episulfide-1-(3,4-episulfide cyclohexane-1-yl)-2-(3,4-epoxy cyclohexane-1-yl)ethane, 1,2-epoxy-1-(3,4-episulfide cyclohexane-1-yl)-2-(3,4-epoxy cyclohexane-1-yl)ethane, and compounds represented by Formulas (2a) and (2-1) to (2-10). 1 in Formula (2-5) and m in Formula (2-7) below each represent an integer from 1 to 30. R in Formula (2-5) below is an alkylene group having from 1 to 8 carbons, and examples thereof include a linear or branched alkylene group, such as a methylene group, an ethylene group, a propylene group, an isopropylene group, a butylene group, an isobutylene group, an s-butylene group, a pentylene group, a hexylene group, a heptylene group, and an octylene group. Among these, a linear or branched alkylene group having from 1 to 3 carbons, such as a methylene group, an ethylene group, a propylene group, or an isopropylene group is preferred. In Formulas (2-9) and (2-10) below, n1 to n6 each represent an integer from 1 to 30. In Formula (2a) below, X³ and X⁴ are each independently an oxygen atom or a sulfur atom, and at least one (preferably two) of X³ or X⁴ is/are a sulfur atom. In Formula (2-3) below, X⁵ and X⁶ are each independently an oxygen atom or a sulfur atom, and at least one (preferably two) of X⁵ or X⁶ is/are a sulfur atom. In Formula (2-4) below, X⁷ and X⁸ are each independently an oxygen atom or a sulfur atom, and at least one (preferably two) of X⁷ or X⁸ is/are a sulfur atom. In Formula (2-5) below, X⁹ and X¹⁰ are each independently an oxygen atom or a sulfur atom, and at least one (preferably two) of X⁹ or X¹⁰ is/are a sulfur atom. In Formula (2-6) below, X¹¹ and X¹² are each independently an oxygen atom or a sulfur atom, and at least one (preferably two) of X¹¹ or X¹² is/are a sulfur atom. In Formula (2-7) below, X¹³ and X¹⁴ are each independently an oxygen atom or a sulfur atom, and at least one (preferably two) of X¹³ or X¹⁴ is/are a sulfur atom. In Formula (2-8) below, X¹⁵ and X¹⁶ are each independently an oxygen atom or a sulfur atom, and at least one (preferably two) of X¹⁵ or X¹⁶ is/are a sulfur atom. In Formula (2-9) below, X¹⁷, X¹⁸, and X¹⁹ are each independently an oxygen atom or a sulfur atom, and at least one (preferably two or more) of X¹⁷, X¹⁸, or X¹⁹ is/are a sulfur atom. In Formula (2-10) below, X²⁰, X²¹, X²², and X²³ are each independently an oxygen atom or a sulfur atom, and at least one (preferably two or more) of X²⁰, X²¹, X²², or X²³ is/are a sulfur atom.

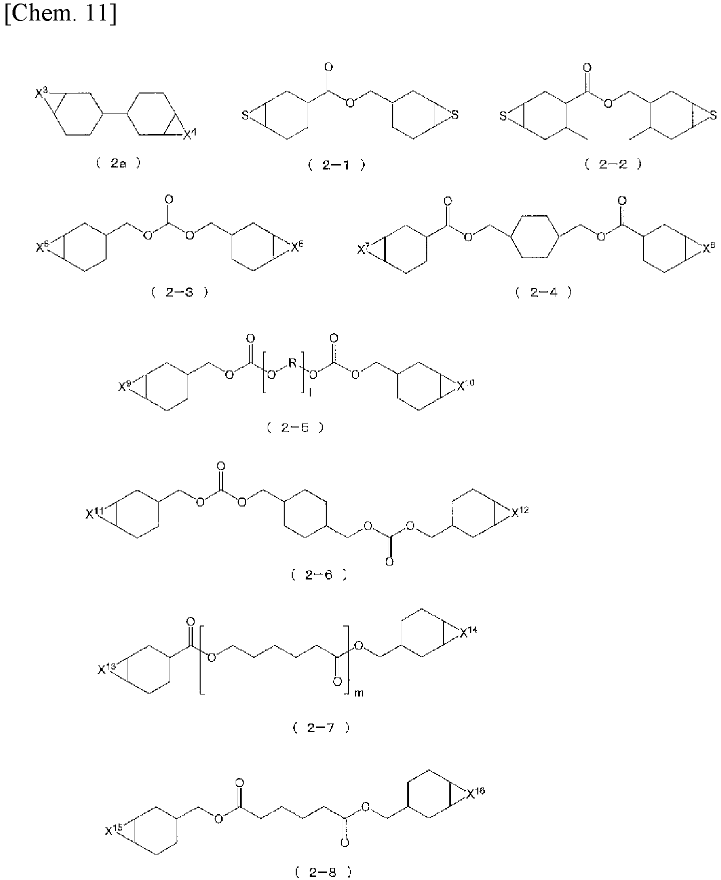

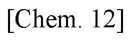

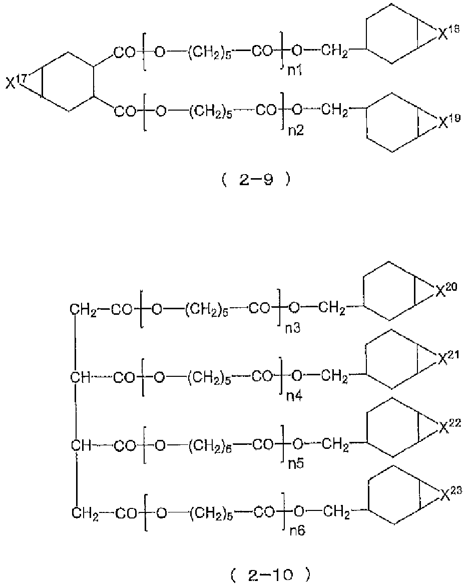

The alicyclic episulfide compounds represented by Formulas (2a) and (2-1) to (2-10) above can be produced, for example, by "Method for Producing Alicyclic Episulfide Compound" described later using, as a raw material, a commercially available alicyclic epoxy compound (e.g., trade names "CELLOXIDE 8000", "CELLOXIDE 2021P", and "CELLOXIDE 2081" (all available from Daicel Corporation), corresponding each of the alicyclic episulfide compounds.

### Method for Producing Alicyclic Episulfide Compound

The alicyclic episulfide compound used in the present disclosure can be produced reacting an alicyclic epoxy compound corresponding to the alicyclic episulfide compound product (a compound in which all of the sulfur atoms of the alicyclic episulfide compound are substituted with oxygen atoms, the compound being sometimes referred to herein as "alicyclic epoxy compound") with a thiation agent.

The alicyclic epoxy compound, serving as a raw material for producing the alicyclic episulfide compound of the present disclosure, can be produced by a known method, and commercially available products such as trade names "CELLOXIDE 2021P", "CELLOXIDE 2081", "CELLOXIDE 2000", and "CELLOXIDE 8000" (all available from Daicel Corporation) can also be used.

The thiation agent used in the production of the alicyclic episulfide compound is not particularly limited as long as it is a compound that promotes a reaction with the epoxy group of the alicyclic epoxy compound to produce an episulfide group (hereinafter, sometimes referred to herein as "episulfide reaction"). One type of the thiation agent may be used alone, or two or more types of the thiation agents may be used in combination.

Examples of the thiation agent used in the episulfide reaction of the present disclosure include thiocyanate and thioureas.

Examples of the thiocyanate include lithium thiocyanate, sodium thiocyanate, potassium thiocyanate, rubidium thiocyanate, cesium thiocyanate, silver thiocyanate, cobalt(II) thiocyanate, mercury(II) thiocyanate, thallium(I) thiocyanate, copper(I) thiocyanate, lead dithiocyanate, nickel dithiocyanate, barium dithiocyanate, ammonium thiocyanate, and guanidine thiocyanate. From the viewpoint of easy availability and excellent reactivity, sodium thiocyanate, potassium thiocyanate, and ammonium thiocyanate are preferred.

Examples of the thioureas include thiourea, N,N'-dimethylthiourea, N,N,N',N'-tetramethylthiourea, N,N'-diethylthiourea, propylthiourea, N,N'-diisopropyl thiourea, N,N'-dibutylthiourea, N-methyl-N'-(2-methyl-2-propenyl)thiourea, N-phenylthiourea, N,N'-diphenylthiourea, 1-methyl-2-imidazolidinethion, 1-benzyl-2-thiourea, N-(3,5-dimethylphenyl)thiourea, N-(2,6-dimethylphenyl)thiourea, N-(2,3-dimethylphenyl)thiourea, N-(2,4,6-trimethylphenyl)thiourea, N,N'-bis(2-methylphenyl)thiourea, N,N'-bis(3,5-dimethylphenyl)thiourea, N,N'-bis(2,6-dimethylphenyl)thiourea, N,N'-bis(2,4,6-trimethylphenyl)thiourea, N-(2-chlorophenyl)thiourea, N-(3-chlorophenyl)thiourea, N-(4-chlorophenyl)thiourea, N-(3,4-dichlorophenyl)thiourea, N-(3,5-dichlorophenyl)thiourea, N-(2,6-dichlorophenyl)thiourea, N-(2,4,6-trichlorophenyl)thiourea, N,N'-bis(2-chlorophenyl)thiourea, N,N'-bis(3,5-dichlorophenyl)thiourea, N,N'-bis(2,6-dichlorophenyl)thiourea, N-(2-fluorophenyl)thiourea, N-(3-fluorophenyl)thiourea, N-(4-fluorophenyl)thiourea, N-[2-(trifluoromethyl)phenyl]thiourea, N-[3-(trifluoromethyl)phenyl]thiourea, N-[4-(trifluoromethyl)phenyl]thiourea, N-(2,6-difluorophenyl)thiourea, N-(2,4-difluorophenyl)thiourea, N-(2,3-difluorophenyl)thiourea, N-(2,4,6-trifluorophenyl)thiourea, N,N'-bis(2-fluorophenyl)thiourea, N,N'-bis(2,6-difluorophenyl)thiourea, N,N'-bis(2,4,6-trifluorophenyl)thiourea, N-(2-cyanophenyl)thiourea, N-(3-cyanophenyl)thiourea, N-(4-cyanophenyl)thiourea, N-(3,5-dicyanophenyl)thiourea, N,N'-bis(4-cyanophenyl)thiourea, N,N'-bis(3,5-dicyanophenyl)thiourea, N-(2-methoxyphenyl)thiourea, N-(3-methoxyphenyl)thiourea, N-(4-methoxyphenyl)thiourea, N-(2,6-dimethoxyphenyl)thiourea, N-(3,5-dimethoxyphenyl)thiourea, N-(2,4,6-tridimethoxyphenyl)thiourea, N,N'-bis(4-methoxyphenyl)thiourea, N,N'-bis(2,6-dimethoxyphenyl)thiourea, N,N'-bis(2,4,6-tridimethoxyphenyl)thiourea, N-(2-nitrophenyl)thiourea, N-(3-nitrophenyl)thiourea, N-(4-nitrophenyl)thiourea, N-(3,5-dinitrophenyl)thiourea, N,N'-bis(3,5-dinitrophenyl)thiourea, and thiourea is preferred from the viewpoint of economy and reactivity.

An amount of the thiation agent used in the episulfide reaction is not particularly limited as long as it allows the episulfide reaction to proceed, but is preferably from 100 to 2000 mol%, and more preferably from 105 to 1000 mol% relative to a total molar amount (100 mol%) of epoxy group contained in the alicyclic epoxy compound used as a raw material. When the amount of the thiation agent used is 100 mol% or greater, the episulfide reaction proceeds well. Meanwhile, even when the amount of the thiation agent used exceeds 2000 mol%, the influence on the progress of the episulfide reaction is small, but such an amount is economically disadvantageous.

The episulfide reaction can be performed in the presence or absence of a solvent. Among these, the hydrolysis and condensation reaction are preferably performed in the presence of a solvent. Examples of the solvent include aromatic hydrocarbons, such as benzene, toluene, xylene, and ethylbenzene; ethers, such as diethyl ether, dimethoxyethane, tetrahydrofuran, and dioxane; ketones, such as acetone, methyl ethyl ketone, and methyl isobutyl ketone; esters, such as methyl acetate, ethyl acetate, isopropyl acetate, and butyl acetate; amides, such as N,N-dimethylformamide and N,N-dimethylacetamide; nitriles, such as acetonitrile, propionitrile, and benzonitrile; and alcohols, such as methanol, ethanol, isopropyl alcohol, and butanol; and water. Among these, the solvent is preferably an alcohol. One type of the solvent can be used alone, or two or more types thereof can be used in combination.

An amount of the solvent used is not particularly limited, and can be appropriately adjusted in a range of 0 to 2000 parts by weight relative to 100 parts by weight of the alicyclic epoxy compound, according to a desired reaction time or the like.

A reaction temperature of the episulfide reaction is not particularly limited, but is preferably from -100 to 150°C, and more preferably from 10 to 80°C. Further, a reaction time of the episulfide reaction is not particularly limited, but is preferably from 1 to 100 hours, and more preferably from 3 to 50 hours. Furthermore, the episulfide reaction can be performed under normal pressure or can be performed under increased pressure or reduced pressure. Here, an atmosphere when performing the episulfide reaction is not particularly limited, and for example, the reaction may be performed in any of an inert gas atmosphere, such as a nitrogen atmosphere or an argon atmosphere, or in the presence of oxygen, such as in the air.

As a result of the episulfide reaction described above, an alicyclic episulfide compound is obtained. After completion of the episulfide reaction, the alicyclic episulfide compound may be separated and purified through, for example, a separation means such as water washing, acid washing, alkali washing, filtration, concentration, distillation, extraction, crystallization, recrystallization, or column chromatography, or a separation means of a combination thereof.

### Method for Producing Polythioether Compound

A polythioether compound can be produced by performing a ring-opening polymerization of an alicyclic episulfide compound in the presence of a base.

In the method for producing a polythioether compound of the present disclosure (hereinafter, simply referred to as "production method of the present disclosure"), one type of the alicyclic episulfide compound can be used alone, or two or more types thereof can be used in combination.

In the production method of the present disclosure, a base is used as a catalyst. The use of the base allows the ring-opening polymerization reaction of the alicyclic episulfide group in the alicyclic episulfide compound to proceed efficiently. One type of the base can be used alone, or two or more types thereof can be used in combination.

The base is not particularly limited, and an amine compound can be preferably used. One type of the amine compound can be used alone, or two or more types thereof can be used in combination.

The amine compound is not particularly limited, and examples thereof include primary amines such as ethylamine, n-propylamine, sec-propylamine, n-butylamine, sec-butylamine, isobutylamine, t-butylamine, pentylamine, hexylamine, heptylamine, octylamine, decylamine, laurylamine, mystyrylamine, 1,2-dimethylhexylamine, 3-pentylamine, 2-ethylhexylamine, allylamine, aminoethanol, 1-aminopropanol, 2-aminopropanol, aminobutanol, aminopentanol, aminohexanol, 3-ethoxypropylamine, 3-propoxypropylamine, 3-isopropoxypropylamine, 3-butoxypropylamine, 3-isobutoxypropylamine, 3 -(2-ethylhexyloxy)propylamine, aminocyclopentane, aminocyclohexane, aminonorbornene, aminomethylcyclohexane, aminobenzene, benzylamine, phenethylamine, α-phenylethylamine, naphthylamine, and furfurylamine; primary polyamines such as ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, dimethylaminopropylamine, diethylaminopropylamine, bis-(3-aminopropyl)ether, 1,2-bis-(3-aminopropoxy)ethane, 1,3-bis-(3-aminopropoxy)-2,2'-dimethylpropane, aminoethylethanolamine, 1,2-, 1,3- or 1,4-bisaminocyclohexane, 1,3- or 1,4-bisaminomethylcyclohexane, 1,3-or 1,4-bisaminoethylcyclohexane, 1,3- or 1,4-bisaminopropylcyclohexane, hydrogenated 4,4'-diaminodiphenylmethane, 2- or 4-aminopiperidine, 2- or 4-aminomethylpiperidine, 2- or 4-aminoethylpiperidine, N-aminoethylpiperidine, N-aminopropylpiperidine, N-aminoethylmorpholine, N-aminopropylmorpholine, isophoronediamine, mentanediamine, 1,4-bisaminopropylpiperazine, o-, m- or p-phenylenediamine, 2,4- or 2,6-tolylenediamine, 2,4-toluenediamine, m-aminobenzylamine, 4-chloro-o-phenylenediamine, tetrachlorop-xylylenediamine, 4-methoxy-6 methyl-m-phenylenediamine, m- or p-xylylenediamine, 1,5- or 2,6-naphthalenediamine, benzidine, 4,4'-bis(o-toluidine), dianisidine, 4,4'-diaminodiphenylmethane, 2,2-(4,4'-diaminodiphenyl) propane, 4,4'-diaminodiphenylether, 4,4'-thiodianiline, 4,4'-diaminodiphenylsulfone, 4,4'-diaminoditolylsulfone, methylenebis(o-chloroaniline), 3,9-bis(3-aminopropyl)2,4,8,10-tetraoxaspiro[5,5]undecane, diethylenetriamine, iminobispropylamine, methyliminobispropylamine, bis(hexamethylene)triamine, triethylenetetramine, tetraethylenepentamine, pentaethylenehexamine, N-aminoethylpiperazine, N-aminopropylpiperazine, 1,4-bis(aminoethylpiperazine), 1,4-bis(aminopropylpiperazine), 2,6-diaminopyridine, and bis(3,4-diaminophenyl)sulfone; secondary amines such as diethylamine, dipropylamine, di-n-butylamine, di-sec-butylamine, diisobutylamine, di-n-pentylamine, di-3-pentylamine, dihexylamine, octylamine, di(2-ethylhexyl)amine, methylhexylamine, diallylamine, pyrrolidine, piperidine, 2-, 3-, 4-picoline, 2,4-, 2,6-, 3,5-lupetidine, diphenylamine, N-methylaniline, N-ethylaniline, dibenzylamine, methylbenzylamine, dinaphthylamine, pyrrole, indoline, indole, and morpholine; secondary polyamines such as N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di-(4-piperidyl)methane, 1,2-di-(4-piperidyl)ethane, 1,3-di-(4-piperidyl)propane, 1,4-di-(4-piperidyl)butane, and tetramethylguanidine; tertiary amines such as trimethylamine, triethylamine, tri-n-propylamine, tri-isopropylamine, tri-1,2-dimethylpropylamine, tri-3-methoxypropylamine, tri-n-butylamine, tri-isobutylamine, tri-sec-butylamine, tri-pentylamine, tri-3-pentylamine, tri-n-hexylamine, tri-n-octylamine, tri-2-ethylhexylamine, tri-dodecylamine, tri-laurylamine, tricyclohexylamine, N,N-dimethylhexylamine, N-methyldihexylamine, N,N-dimethylcyclohexylamine, N,N-dicyclohexylmethylamine, N-methyldicyclohexylamine, triethanolamine, tribenzylamine, N,N-dimethylbenzylamine, diethylbenzylamine, triphenylamine, N,N-dimethylamino-p-cresol, N,N-dimethylaminomethylphenol, 2-(N,N-dimethylaminomethyl)phenol, N,N-dimethylaniline, N,N-diethylaniline, pyridine, quinoline, N-methylmorpholine, N-methylpiperidine, and 2-(2-dimethylaminoethoxy)-4-methyl-1,3,2-dioxabornane; tertiary polyamines such as tetramethylethylenediamine, pyrazine, N,N'-dimethylpiperazine, N,N'-bis((2-hydroxy)propyl)piperazine, hexamethylenetetramine, N,N,N',N'-tetramethyl-1,3-butanamine, 2-dimethylamino-2-hydroxypropane, diethylaminoethanol, N,N,N-tris(3-dimethylaminopropyl)amine, 2,4,6-tris(N,N-dimethylaminomethyl)phenol and heptamethylisobiguanide; various imidazoles such as imidazole, N-methylimidazole, 2-methylimidazole, 4-methylimidazole, N-ethylimidazole, 2-ethylimidazole, 4-ethylimidazole, N-butylimidazole, 2-butylimidazole, N-undecylimidazole, 2-undecylimidazole, N-phenylimidazole, 2-phenylimidazole, N-benzylimidazole, 2-benzylimidazole, 1-benzyl-2-methylimidazole, N-(2'-cyanoethyl)-2-methylimidazole, N-(2'-cyanoethyl)-2-undecylimidazole, N-(2'-cyanoethyl)-2-phenylimidazole, 3,3-bis-(2-ethyl-4-methylimidazolyl)methane, an adduct of alkylimidazole and isocyanuric acid, and a condensate of alkylimidazole and formaldehyde; amidines such as 1,8-diazabicyclo[5.4.0]undecene-7, 1,5-diazabicyclo[4.3.0]nonene-5, and 6-dibutylamino-1,8-diazabicyclo[5.4.0]undecene-7; and guanidines such as 1,5,7-triazabicyclo[4.4.0]decene-5 and 7-methyl-1,5,7-triazabicyclo[4.4.0]decene-5.

The base is preferably a strong base from the viewpoint of reactivity of ring-opening polymerization. Amidines such as 1,8-diazabicyclo[5.4.0]undecene-7, 1,5-diazabicyclo[4.3 .0]nonene-5, and 6-dibutylamino-1,8-diazabicyclo[5.4.0]undecene-7, and guanidines such as 1,5,7-triazabicyclo[4.4.0]decene-5, and 7-methyl-1,5,7-triazabicyclo[4.4.0]decene-5 are preferred. From the economic viewpoint, 1,8-diazabicyclo[5.4.0]undecene-7 is more preferred.

Note that the term "strong base" refers to a base whose conjugated acid has an acid dissociation constant (pKₐ) of 12 or greater, preferably 13 or greater.

An amount of the base used is not particularly limited, but is preferably from 0.01 to 20 parts by weight, more preferably from 0.01 to 15 parts by weight, still more preferably from 0.05 to 12 parts by weight, and yet still more preferably from 0.1 to 10 parts by weight, relative to 100 parts by weight of the alicyclic episulfide compound. More specifically, the base is used in a proportion of 0.0001 to 0.2 equivalent, preferably a proportion of 0.0005 to 0.1 equivalent, more preferably a proportion of 0.001 to 0.12 equivalent, and still more preferably a proportion of 0.005 to 0.1 equivalent per equivalent of alicyclic episulfide group contained in the alicyclic episulfide compound. The base is used within the above range, and thus the ring-opening polymerization reaction of the alicyclic episulfide compound tends to proceed efficiently. When two or more types of bases are used, the total amount of these bases preferably satisfies the above range.

The production method of the present disclosure can be performed in the presence or absence of a solvent. Particularly, from the viewpoint of reactivity and economic efficiency, it is preferable to perform the method in the absence of a solvent. Performing of the method in the absence of a solvent is economical because there is no need to remove the solvent while the reactivity is maintained.

In a case where the solvent is used, examples of the solvent include aromatic hydrocarbons, such as benzene, toluene, xylene, and ethylbenzene; ethers, such as diethyl ether, dimethoxyethane, tetrahydrofuran, and dioxane; ketones, such as acetone, methyl ethyl ketone, and methyl isobutyl ketone; esters, such as methyl acetate, ethyl acetate, isopropyl acetate, and butyl acetate; amides, such as N,N-dimethylformamide and N,N-dimethylacetamide; nitriles, such as acetonitrile, propionitrile, and benzonitrile; and alcohols, such as methanol, ethanol, isopropyl alcohol, and butanol; and water. One type of the solvent can be used alone, or two or more types thereof can be used in combination.

An amount of the solvent used is not particularly limited, and can be appropriately adjusted in a range of 0 to 2000 parts by weight relative to 100 parts by weight of the alicyclic epoxy compound, according to a desired reaction time or the like.

### Thiol Compound

The production method of the present disclosure may be further performed in the coexistence of a thiol compound. When the thiol compound is used in the production method of the present disclosure, it is considered that a thiol group reacts with an alicyclic episulfide group to cause the ring-opening polymerization reaction to proceed. In addition, since a sulfur concentration in the cured product described later can be adjusted, it is possible to form a cured product having a high refractive index and high Abbe number and a good balance between the refractive index and Abbe number. However, the ring-opening polymerization reaction sufficiently proceeds by the catalytic action of the base without the use of the thiol compound, and thus the thiol compound need not to be used. Hence, the production method of the present disclosure may be performed in the absence of a thiol compound.

When the production method of the present disclosure is performed in the presence of a thiol compound, the thiol compound is not particularly limited, and examples thereof include thiophenols, thiols, mercapto alcohols, hydroxy thiophenols, mercapto organic acids, and mercapto amines.

The thiophenols are not particularly limited, and examples thereof include thiophenol, 4-tert-butylthiophenol, 2-methylthiophenol, 3-methylthiophenol, 4-methylthiophenol, o-dimercaptobenzene, m-dimercaptobenzene, p-dimercaptobenzene, and 1,3,5-trimercaptobenzene.

The thiols are not particularly limited, and examples thereof include monothiols such as methyl mercaptan, ethyl mercaptan, n-propyl mercaptan, n-butyl mercaptan, allyl mercaptan, n-hexyl mercaptan, n-octyl mercaptan, n-decyl mercaptan, n-dodecyl mercaptan, n-tetradecyl mercaptan, n-hexadecyl mercaptan, n-octadecyl mercaptan, cyclohexyl mercaptan, isopropyl mercaptan, tert-butyl mercaptan, tert-nonyl mercaptan, tert-dodecyl mercaptan, benzyl mercaptan, 4-chlorobenzyl mercaptan, methyl thioglycolate, ethyl thioglycolate, n-butyl thioglycolate, n-octyl thioglycolate, methyl(3-mercaptopropionate), ethyl(3-mercaptopropionate), 3-methoxybutyl(3-mercaptopropionate), n-butyl(3-mercaptopropionate), 2-ethylhexyl(3-mercaptopropionate), and n-octyl(3-mercaptopropionate); and polyvalent thiols such as methanedithiol, 1,2-dimercaptoethane, 2,2-dimercaptopropane, 1,3-dimercaptopropane, 1,2,3-trimercaptopropane, 1,4-dimercaptobutane, 1,6-dimercaptohexane, bis(2-mercaptoethyl)sulfide, 1,2-bis(2-mercaptoethylthio)ethane, 1,5-dimercapto-3-oxapentane, 1,8-dimercapto-3,6-dioxaoctane, 2,2-dimethylpropane-1,3-dithiol, 3,4-dimethoxybutane-1,2-dithiol, 2-mercaptomethyl-1,3-dimercaptopropane, 2-mercaptomethyl-1,4-dimercaptopropane, 2-(2-mercaptoethylthio)-1,3-dimercaptopropane, 1,2-bis(2-mercaptoethylthio)-3 -mercaptopropane, 1,1,1-tris(mercaptomethyl)propane, tetrakis(mercaptomethyl)methane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,3,3-tetrakis(mercaptomethylthio)propane, ethylene glycol bis(2-mercaptoacetate), ethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 1,1-dimercaptocyclohexane, 1,2-dimercaptocyclohexane, 1,3-dimercaptocyclohexane, 1,4-dimercaptocyclohexane, 1,3-bis(mercaptomethyl)cyclohexane, 1,4-bis(mercaptomethyl)cyclohexane, 2,5-bis(mercaptomethyl)-1,4-dithiane, 2,5-bis(mercaptoethyl)-1,4-dithiane, 1,2-bis(mercaptomethyl)benzene, 1,3-bis(mercaptomethyl)benzene, 1,4-bis(mercaptomethyl)benzene, bis(4-mercaptophenyl)sulfide, bis(4-mercaptophenyl)ether, 2,2-bis(4-mercaptophenyl)propane, bis(4-mercaptomethylphenyl)sulfide, bis(4-mercaptomethylphenyl)ether, and 2,2-bis(4-mercaptomethylphenyl)propane.

The mercapto alcohols are not particularly limited, and examples thereof include 2-mercaptoethanol, 2-mercaptopropanol, 3-mercaptopropanol, 2-hydroxypropyl mercaptan, 2-phenyl-2-mercaptoethanol, 2-phenyl-2-hydroxyethyl mercaptan, 3-mercapto-1,2-propanediol, 2-mercapto-1,3-propanediol, 2,3-dimercaptopropanol, 1,3 -dimercapto-2-propanol, 2,2-dimethylpropane-1,3 -dithiol, and glyceryl dithioglycolate.

The hydroxythiophenols are not particularly limited, and examples thereof include 2-hydroxythiophenol, 3-hydroxythiophenol, and 4-hydroxythiophenol.

The mercapto organic acids are not particularly limited, and examples thereof include mercapto carboxylic acids such as 2-mercapto acetic acid (thioglycolic acid) and 3-mercapto propionic acid.

The mercapto amines are not particularly limited, and examples thereof include mercapto alkylamines such as 2-mercaptoethylamine, 3-mercaptopropylamine, and 3-mercaptobutylamine; and aminothiophenols such as 4-aminothiophenol.

As the thiol compound, a compound having two or more thiol groups in the molecule is preferred from the viewpoint that the molecular weight of the polythioether compound to be obtained is likely to increase. The number of thiol groups in the molecule of the thiol compound is preferably 2 or greater, more preferably 3 or greater, and still more preferably 4 or greater.

Examples of the compound having two or more thiol groups in the molecule include polyvalent thiols such as o-dimercaptobenzene, m-dimercaptobenzene, p-dimercaptobenzene, 1,3,5-trimercaptobenzene, methanedithiol, 1,2-dimercaptoethane, 2,2-dimercaptopropane, 1,3-dimercaptopropane, 1,2,3-trimercaptopropane, 1,4-dimercaptobutane, 1,6-dimercaptohexane, bis(2-mercaptoethyl)sulfide, 1,2-bis(2-mercaptoethylthio)ethane, 1,5-dimercapto-3-oxapentane, 1,8-dimercapto-3,6-dioxaoctane, 2,2-dimethylpropane-1,3-dithiol, 3,4-dimethoxybutane-1,2-dithiol, 2-mercaptomethyl-1,3-dimercaptopropane, 2-mercaptomethyl-1,4-dimercaptopropane, 2-(2-mercaptoethylthio)-1,3-dimercaptopropane, 1,2-bis(2-mercaptoethylthio)-3-mercaptopropane, 1,1,1-tris(mercaptomethyl)propane, tetrakis(mercaptomethyl)methane, 4,8-dimercaptomethyl-1,11-dimercapto-3,6,9-trithiaundecane, 4,7-dimercaptomethyl-1,-11-dimercapto-3,6,9-trithiaundecane, 5,7-dimercaptomethyl-1,11-dimercapto-3,6,9-trithiaundecane, 1,1,3,3-tetrakis(mercaptmethylthio)propane, ethylene glycol bis(2-mercaptoacetate), ethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), 1,1-dimercaptocyclohexane, 1,2-dimercaptocyclohexane, 1,3-dimercaptocyclohexane, 1,4-dimercaptocyclohexane, 1,3-bis(mercaptomethyl)cyclohexane, 1,4-bis(mercaptomethyl)cyclohexane, 2,5-bis(mercaptomethyl)-1,4-dithiane, 2,5-bis(mercaptoethyl)-1,4-dithiane, 1,2-bis(mercaptomethyl)benzene, 1,3-bis(mercaptomethyl)benzene, 1,4-bis(mercaptomethyl)benzene, bis(4-mercaptophenyl)sulfide, bis(4-mercaptophenyl)ether, 2,2-bis(4-mercaptophenyl)propane, bis(4-mercaptomethylphenyl)sulfide, bis(4-mercaptomethylphenyl)ether, 2,2-bis(4-mercaptomethylphenyl)propane, 2,3-dimercaptopropanol, 1,3-dimercapto-2-propanol, 2,2-dimethylpropane-1,3-dithiol, and glyceryl dithioglycolate.

When the production method of the present disclosure is performed in the presence of a thiol compound, an amount of the thiol compound used is not particularly limited, but is preferably from 0.1 to 200 parts by weight, more preferably from 0.5 to 150 parts by weight, and still more preferably from 0.6 to 120 parts by weight, relative to 100 parts by weight of the alicyclic episulfide compound. More specifically, the thiol group is used in a proportion of 0.005 to 1.5 equivalents, and preferably a proportion of 0.005 to 1.2 equivalents per equivalent of alicyclic episulfide group contained in the alicyclic episulfide compound. The amount of the thiol compound used is 0.1 parts by weight or 0.005 equivalent or greater, and thus a molecular weight of the polythioether compound to be obtained is easily adjusted to an appropriate range. Meanwhile, when the amount of the thiol compound used exceeds 200 parts by weight or 1.5 equivalents, the balance between the refractive index and the Abbe number of the cured product described below may be deteriorated. When two or more types of the thiol compound are used, it is preferable that the total amount of these thiol compounds satisfies the above range.

When the production method of the present disclosure is performed in the presence of a thiol compound, an amount of the base used with respect to the thiol compound is not particularly limited, and the base is used in a proportion of 0.001 equivalent or greater, preferably in a proportion of 0.005 equivalent or greater, more preferably in a proportion of 0.01 equivalent or greater, still more preferably in a proportion of 0.05 equivalent or greater, and yet still more preferably in a proportion of 0.1 equivalent or greater per equivalent of thiol group contained in the thiol compound. The base is used in this range or greater, and thus the ring-opening polymerization reaction of the alicyclic episulfide compound easily proceeds. Meanwhile, it is preferable that the base is used preferably in a proportion of less than 1.0 equivalent, more preferably in a proportion of 0.5 equivalent or less, still more preferably in a proportion of 0.25 equivalent or less, and yet still more preferably in a proportion of 0.2 equivalent or less per equivalent of thiol group contained in the thiol compound. When the amount of the base used exceeds this range, there is little effect on the reactivity. Thus, it is preferable to use the base in this range or less from the economical viewpoint. When two or more types of the thiol compounds and/or the bases are used, it is preferable that the total amount of these thiol compounds and/or bases preferably satisfies the above range.

A reaction temperature of the production method of the present disclosure is not particularly limited, but can be selected from a range of 0 to 150°C. Specifically, the reaction temperature is preferably 10°C or higher, more preferably 20°C or higher, still more preferably 30°C or higher, and yet still more preferably 40°C or higher. The production method of the present disclosure is performed at a certain reaction temperature or higher, and thus the ring-opening polymerization reaction of the alicyclic episulfide compound is promoted, the reaction time is shortened, and the productivity tends to be improved. Further, the reaction temperature is preferably 120°C or lower, more preferably 110°C or lower, still more preferably 100°C or lower, and yet still more preferably 80°C or lower. When the reaction temperature exceeds this range, there is little effect on the reactivity. Thus, it is preferable to perform the reaction at this temperature or lower from the economical viewpoint.

In addition, a reaction time of the production method of the present disclosure is not particularly limited, but is preferably from 1 minute to 500 hours, and more preferably from 0.5 to 100 hours. The production method of the present disclosure can be performed under normal pressure, under reduced pressure, or under pressurization. Here, an atmosphere when performing the production method of the present disclosure is not particularly limited, and for example, the production method may be performed in any of an inert gas atmosphere, such as a nitrogen atmosphere or an argon atmosphere, or in the presence of oxygen, such as in the air.

A polythioether compound can be produced by the production method of the present disclosure. After completion of the production method of the present disclosure, the polythioether compound may be separated and purified through, for example, a separation means such as water washing, acid washing, alkali washing, filtration, concentration, distillation, extraction, crystallization, recrystallization, or column chromatography, or a separation means of a combination thereof.

A number average molecular weight of the polythioether compound produced by the production method of the present disclosure is not particularly limited, and is, for example, from 500 to 50000, preferably from 600 to 30000, and more preferably from 800 to 20000. When the number average molecular weight of the polythioether compound is in this range, the handleability of the curable composition described later tends to be improved. The number average molecular weight of the polythioether compound is a number average molecular weight measured by gel permeation chromatography (GPC) calibrated with polystyrene used as a molecular weight standard.

A reaction mechanism of the production method of the present disclosure is not clear. For example, when an amine compound is used as a base, it is presumed that a unshared electron pair (lone pair) present at the nitrogen atom of the amine compound undergoes addition to an alicyclic episulfide group of an alicyclic episulfide compound results in ring-opening, and the formed thiol anion attacks an alicyclic episulfide group of another alicyclic episulfide compound, and thus the ring-opening polymerization proceeds in a chain-reaction manner (see the reaction scheme below).

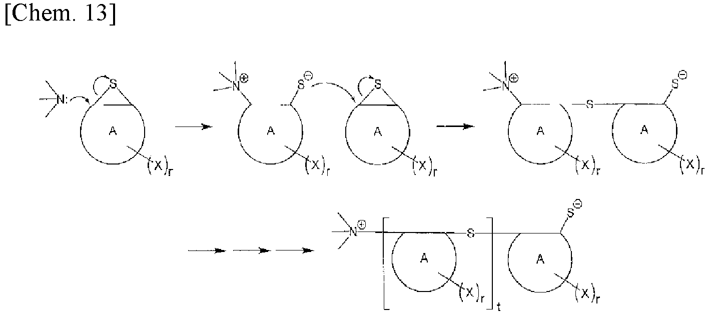

In the reaction scheme, t is a natural number of 1 or greater, and other symbols are synonymous with those described above.

Therefore, it is speculated that the polythioether compound produced by the production method of the present disclosure has, in the molecule, a structure represented by Formula (II) below, preferably a structure represented by Formula (IIa): 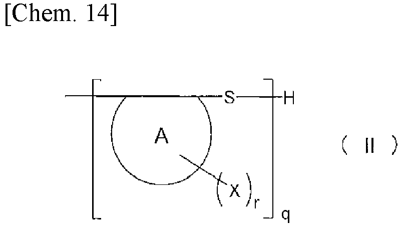 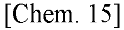 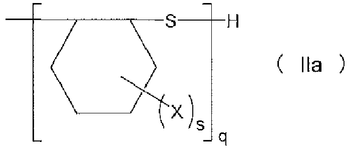 in Formulas (II) and (IIa), X, ring A, r, s are synonymous with those described above; q represents a natural number of 1 or greater; and X, r, and s in a group in a square bracket may be identical or different when q is 2 or greater.

The reaction mechanism of the production method of the present disclosure described above and the structure contained in the polythioether compound are speculation, and the present disclosure is not limited by them.

### Curable Composition

The curable composition of the present disclosure includes a polythioether compound produced by the production method of the present disclosure. Therefore, it is considered that the curable composition of the present disclosure preferably contains a polythioether compound having the structures represented by Formulas (II) and (IIa) above.

In the curable composition of the present disclosure, one type of the polythioether compound can be used alone, or two or more types thereof can be used in combination.

A content (blending amount) of the polythioether compound in the curable composition (100 wt.%) of the present disclosure is not particularly limited, but is preferably 3 wt.% or greater and less than 100 wt.%, more preferably from 4 to 90 wt.%, and still more preferably from 5 to 80 wt.%. When the content of the polythioether compound is less than 3 wt.%, the refractive index, Abbe number, heat resistance, and light resistance of the cured product may decrease. When two or more types of the polythioether compound are used, it is preferable that the total amount of these polythioether compounds satisfies the above range.

The curable composition of the present disclosure preferably contains a component that may react or polymerize with the polythioether compound to produce a cured product (hereinafter, sometimes referred to as "curable component"), in addition to the polythioether compound.

The curable component is preferably a compound having an ethylenically unsaturated bond group that may react with a thiol group present at the end of the polythioether compound. When the polythioether compound itself has an ethylenically unsaturated bond group (e.g., a vinyl group), the curable composition of the present disclosure need not to contain a compound having an ethylenically unsaturated bond group as a curable component.

The compound having an ethylenically unsaturated bond group is preferably a compound having two or more ethylenically unsaturated bond groups.

Examples of the compound (B) having two or more ethylenically unsaturated bond groups include an aliphatic, alicyclic, or aromatic (meth)acrylate monomer, an allylic monomer, a urethane(meth)acrylate oligomer, an epoxy(meth)acrylate oligomer, and a polyester(meth)acrylate oligomer.

Examples of the aliphatic(meth)acrylate monomer include alkylene glycol di(meth)acrylates such as neopentyl glycol di(meth)acrylate and polyethylene glycol di(meth)acrylate; alkylene diol di(meth)acrylates such as 1,6-hexanediol di(meth)acrylate and 1,9-nonanediol di(meth)acrylate; tri(meth)acrylates such as trimethylolpropane tri(meth)acrylate, ethylene oxide, and propylene oxide-modified trimethylolpropane triacrylate; tetra(meth)acrylates such as pentaerythritol; tetra(meth)acrylates such as ditrimethylolpropane, penta(meth)acrylates such as dipentaerythritol and ethoxylated pentaerythritol; and hexa(meth)acrylates such as dipentaerythritol. Specific examples thereof include 1,6-hexanediol diacrylate, trimethylolpropane triacrylate, ethylene oxide-modified trimethylolpropane triacrylate, pentaerythritol tetraacrylate, ditrimethylolpropane tetraacrylate, and dipentaerythritol hexaacrylate.

Examples of the alicyclic(meth)acrylate monomer include dicyclopentadienyl di(meth)acrylate, and specific examples thereof include dicyclopentadienyl diacrylate.

Examples of the aromatic(meth)acrylate monomer include ethoxylated bisphenol A di(meth)acrylate, ethoxylated bisphenol F di(meth)acrylate, and specific examples thereof include ethoxylated bisphenol A diacrylate.

Examples of the allylic monomer include tri(meth)allyl isocyanurate, and specific examples thereof include trimethallyl isocyanurate and triallyl isocyanurate.

Examples of the urethane(meth)acrylate oligomer include polyether urethane(meth)acrylate obtained by subjecting ether glycol such as ethylene glycol to chain extension using diisocyanate, and (meth)acrylating both terminals thereof; polyester urethane(meth)acrylate obtained using polyester glycol instead of ether glycol; and those obtained using caprolactone diol, polycarbonate diol, or the like.

Examples of the epoxy(meth)acrylate oligomer include a reaction product obtained by reacting (meth)acrylic acid with an epoxy group, such as that in a bisphenol A type epoxy resin, a novolac type epoxy resin, and an epoxidized oil type.

Examples of the polyester(meth)acrylate oligomer include one obtained by subjecting a polybasic acid and a polyhydric alcohol to polycondensation to produce a polyester having a hydroxyl group or a carboxyl group, and then subjecting the hydroxyl group in the polyester and (meth)acrylic acid to esterification, or subjecting the carboxyl group in the polyester and a (meth)acrylate having hydroxyl group to esterification. The type of the core structure of the oligomer, for example, the diol component in the case of polyurethane(meth)acrylate, is not limited to one, and different components may be mixed.

One having three (trifunctional) or more ethylenically unsaturated bond groups is preferred from the viewpoint of excellent heat resistance, and poly(meth)acrylates of trivalent or higher polyhydric alcohols is preferred. Specifically, trimethylolpropanetri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, and the like are preferred, and dipentaerythritol penta(meth)acrylate and dipentaerythritol hexa(meth)acrylate are more preferred.

When the curable composition of the present disclosure contains a compound having an ethylenically unsaturated bond group, an amount of the compound used is not particularly limited, but is preferably such that the amount of the ethylenically unsaturated group is from 0.1 to 10 equivalents, more preferably from 0.2 to 8 equivalents, and still more preferably from 0.3 to 5 equivalents, relative to the amount of thiol group contained in the polythioether compound. The amount of thiol group contained in the polythioether compound can be calculated based on the number average molecular weight of the polythioether compound.

When the curable composition of the present disclosure contains a compound having an ethylenically unsaturated bond group as a curable component and/or when the polythioether compound itself has an ethylenically unsaturated bond group, it is preferable to contain a radical polymerization initiator to promote the reaction (thiolene reaction) between the thiol group and the ethylenically unsaturated bond group in the polythioether compound.

Examples of the radical polymerization initiator include organic peroxides, azo compounds, redox initiators, photopolymerization initiators, and thermal polymerization initiators.

Examples of the organic peroxides include benzoyl peroxide, cumene hydroperoxide, di-tert-butyl peroxide, tert-butyl hydroperoxide, and dicumyl peroxide.

Specific examples of the azo compound include 2,2'-azobispropane, 2,2'-dichloro-2,2'-azobispropane, 1,1'-azo(methylethyl)diacetate, 2,2'-azobisisobutane, 2,2'-azobisisobutylamide, 2,2'-azobisisobutyronitrile (AIBN), 2,2'-azobis-2-methylpropionate, 2,2'-dichloro-2,2'-azobisbutane, 2,2'-azobis-2-methylbutyronitrile, dimethyl 2,2'-azobisisobutyrate, 3,5-dihydroxymethylphenylazo-2-methylmalonodinitrile, 2,2'-azobis-2-methylvaleronitrile, 4,4'-azobis-4-dimethyl cyanovalerate, and 2,2'-azobis-2,4-dimethylvaleronitrile.

Examples of the redox initiator include combinations such as hydrogen peroxide-iron (II) salt, organic oxide-dimethylaniline, and cerium (IV) salt-alcohol.

Examples of the photopolymerization initiator include known photopolymerization initiators: alkylphenone-based photopolymerization initiators, α-aminoalkylketone-based photopolymerization initiators, and phosphine oxide-based photopolymerization initiators.

More specifically, examples of the alkylphenone-based photopolymerization initiators include 1-hydroxycyclohexylphenylketone, 2,2-dimethoxy-1,2-diphenylethane-1-one, 2-hydroxy-2-methyl-1-phenylpropane-1-one, 1-[4-(2-hydroxyethoxy)-phenyl]-2-hydroxy-2-methyl-1-propane-1-one, and 2-hydroxy-1-{4-[4-(2-hydroxy-2-methylpropionyl)benzyl]phenyl}-2-methylpropane-1-one.

Examples of the α-aminoalkylketone-based photopolymerization initiators include 2-methyl-1-[4-(methylthio)phenyl]-2-morpholinopropane-1-one, 2-benzyl-2-dimethylamino-1-(4-morpholinophenyl)-1-butanone, and 2-dimethylamino-2-(4-methylbenzyl)-1-(4-morpholine-4-yl phenyl)butane-1-one.

Examples of the phosphine oxide-based photopolymerization initiators include bis(2,4,6-trimethylbenzoyl)phenylphosphine oxide, bis(2,6-dimethoxybenzoyl)-2,4,4-trimethylpentylphosphine oxide, and 2,4,6-trimethylbenzoyl-diphenylphosphine oxide. Further, two or more of these photopolymerization initiators may be mixed and added.

As another initiator, a dialkyl disulfide in which the S-S bond is easily decomposed by heat, such as tetraalkylthiuram disulfide, can also be used.

An amount of the radical polymerization initiator used is preferably from 0.001 to 10 parts by weight, more preferably from 0.005 to 5 parts by weight, and still more preferably from 0.01 to 3 parts by weight, relative to 100 parts by weight of the polythioether compound (in the case of using a compound having an ethylenically unsaturated bond group, the total of the polythioether compound and the compound having an ethylenically unsaturated bond group). When the amount of the radical polymerization initiator used is less than 0.001 part by weight, a sufficient curability may not be obtained.

The curable composition of the present disclosure may contain, as a curable component, a component capable of reacting with a thiol group present at the end of the polythioether compound (sometimes referred to as "another curable component").

Examples of another curable component include an isocyanate compound, a thioisocyanate compound, an epoxy compound, an acid anhydride, and an episulfide compound other than the alicyclic episulfide compound.

The isocyanate compound is not particularly limited, and examples thereof include diethylene diisocyanate, tetramethylene diisocyanate, hexamethylene diisocyanate, trimethylhexamethylene diisocyanate, cyclohexane diisocyanate, 1,3-bis(isocyanatomethyl)cyclohexane, 1,4-bis(isocyanatomethyl)cyclohexane, isophorone diisocyanate, 2,6-bis(isocyanatomethyl)decahydronaphthalene, lysine triisocyanate, 2,4-tolylene diisocyanate, 2,6-tolylene diisocyanate, o-tolidine diisocyanate, 4,4'-diphenylmethane diisocyanate, 4,4'-diphenyl ether diisocyanate, 3-(2'-isocyanate cyclohexyl)propyl isocyanate, tris(phenyl isocyanate)thiophosphate, isopropylidene bis(cyclohexyl isocyanate), and 2,2'-bis(4-isocyanatophenyl)propane, triphenylmethane triisocyanate, bis(diisocyanate tolyl)phenylmethane, 4,4',4"-triisocyanate-2,5-dimethoxyphenylamine, 3,3'-dimethoxybenzidine-4,4'-diisocyanate, 1,3-phenylene diisocyanate, 1,4-phenylene diisocyanate, 4,4'-diisocyanate biphenyl, 4,4'-diisocyanate-3,3'-dimethylbiphenyl, dicyclohexylmethane-4,4'-diisocyanate, 1,1'-methylene bis(4-isocyanatobenzene), 1,1'-methylene bis(3-methyl-4-isocyanatobenzene), m-xylylene diisocyanate, p-xylylene diisocyanate, 1,3-bis(1-isocyanate-1-methylethyl)benzene, 1,4-bis(1-isocyanate-1-methylethyl)benzene, 1,3-bis(2-isocyanate-2-propyl)benzene, 2,6-bis(isocyanatomethyl)naphthalene, 1,5-naphthalene diisocyanate, bis(isocyanatomethyl)tetrahydrodicyclopentadiene, bis(isocyanatomethyl)dicyclopentadiene, bis(isocyanatomethyl)tetrahydrothiophene, bis(isocyanatomethyl)norbornene, bis(isocyanatomethyl)adamantane, dimer acid diisocyanate, 1,3,5-tri(1-isocyanatohexyl)isocyanuric acid, thiodiethyl diisocyanate, thiodipropyl diisocyanate, thiodihexyl diisocyanate, bis[(4-isocyanatomethyl)phenyl]sulfide, 2,5-diisocyanate-1,4-dithiane, 2,5-diisocyanate methyl-1,4-dithiane, 2,5-diisocyanate methylthiophene, dithiodiethyl diisocyanate, and dithiodipropyl diisocyanate. Examples of the polyisocyanates include isocyanates such as dimers formed by the biuret type reaction, cyclic trimers, and adducts of alcohols or thiols.

The thioisocyanate compound is not particularly limited, and examples thereof include a compound in which the whole or a portion of the isocyanate group(s) of the isocyanate compound is changed to an isothiocyanate group.

The epoxy compound is not particularly limited, and examples thereof include a phenol-based epoxy compound produced by condensing, with epihalohydrin, an aromatic hydroxy compound such as phenol, cresol, xylenol, naphthol, hydroquinone, catechol, resorcin, bisphenol A, bisphenol F, bisphenol sulfone, bisphenol ether, bisphenol sulfide, halogenated bisphenol A, or a novolac resin; an alcohol-based epoxy compound produced by condensing, with epihalohydrin, an alcohol compound such as methanol, ethanol, propanol, butanol, pentanol, hexanol, heptanol, octanol, nonanol, isopropyl alcohol, isobutyl alcohol, tert-butanol, neopentyl alcohol, ethylene glycol, diethylene glycol, triethylene glycol, polyethylene glycol, propylene glycol, dipropylene glycol, polypropylene glycol, 1,3-propanediol, 1,4-butanediol, 1,6-hexanediol, neopentyl glycol, glycerin, trimethylolpropane, pentaerythritol, 1,3- and 1,4-cyclohexanediol, 1,3- and 1,4-cyclohexanedimethanol, bisphenol A, an adduct of bisphenol A and ethylene oxide, or an adduct of bisphenol A and propylene oxide; a glycidyl ester-based epoxy compound produced by condensing, with epihalohydrin, a carboxylic acid compound such as formic acid, acetic acid, propionic acid, butyric acid, valeric acid, hexanoic acid, isobutyric acid, isovaleric acid, benzoic acid, benzoylacetic acid, naphthaline carboxylic acid, adipic acid, sebacic acid, dodecylcarboxylic acid, dimer acid, phthalic acid, isophthalic acid, terephthalic acid, tetrahydrophthalic acid, methyltetrahydrophthalic acid, hexahydrophthalic acid, hexahydroisophthalic acid, hexahydroterephthalic acid, HET acid, nadic acid, maleic acid, succinic acid, fumaric acid, trimellitic acid, benzenetetracarboxylic acid, benzophenonetetracarboxylic acid, naphthalenedicarboxylic acid, or diphenyldicarboxylic acid; an amine-based epoxy compound produced by condensing, with epihalohydrin, primary amines such as methylamine, ethylamine, propylamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, bis(3-aminopropyl)ether, 1,2-bis(3-aminopropoxy)ethane, 1,3-bis(3-aminopropoxy)-2,2'-dimethylpropane, 1,2-, 1,3- or 1,4-bisaminocyclohexane, 1,3- or 1,4-bisaminomethylcyclohexane, 1,3- or 1,4-bisaminoethylcyclohexane, 1,3- or 1,4-bisaminopropylcyclohexane, hydrogenated 4,4'-diaminodiphenylmethane, isophoronediamine, 1,4-bisaminopropylpiperazine, m- or p-phenylenediamine, 2,4- or 2,6-tolylenediamine, m- or p-xylylenediamine, 1,5- or 2,6-naphthalenediamine, 4,4'-diaminodiphenylmethane, 4,4'-diaminodiphenyl ether, and 2,2-(4,4'-diaminodiphenyl)propane, or a secondary amine such as dimethylamine, diethylamine, dibutylamine, methylethylamine, methylpropylamine, methylbutylamine, methylpentylamine, methylhexylamine, ethylpropylamine, ethylbutylamine, ethylpentylamine, ethylhexylamine, N,N'-dimethylethylenediamine, N,N'-dimethyl-1,2-diaminopropane, N,N'-dimethyl-1,3-diaminopropane, N,N'- dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,4-diaminobutane, N,N'-diethyl-1,5-diaminopentane, N,N'-diethyl-1,6-diaminohexane, N,N'-diethyl-1,7-diaminoheptane, piperazine, 2-methylpiperazine, 2,5- or 2,6-dimethylpiperazine, homopiperazine, 1,1-di(4-piperidyl)methane, 1,2-di(4-piperidyl)ethane, 1,3-di(4-piperidyl)propane, or 1,4-di(4-piperidyl)butane; an alicyclic epoxy compound (such as a compound in which a sulfur atom of the alicyclic episulfide compound is substituted with an oxygen atom); an epoxy compound produced by epoxidizing an unsaturated compound such as styrene oxide, dicyclopentadiene epoxide, epoxidized soybean oil, epoxidized polybutadiene, or vinylcyclohexene epoxide; and a urethane-based epoxy compound produced from the above-described polyhydric alcohol, phenol compound, diisocyanate, and glycidol.

As the acid anhydride, a known or common acid anhydride-based curing agent can be used, and there is no particular limitation thereon. Examples thereof include an acid anhydride which is liquid at 25°C, such as methyltetrahydrophthalic anhydride, methylhexahydrophthalic anhydride, dodecenyl succinic anhydride, or methylendomethylene tetrahydrophthalic anhydride; and a solid acid anhydride which is solid at 25°C, such as succinic anhydride, hydrogenated pyromellitic anhydride, hydrogenated biphenyl dianhydride, phthalic anhydride, tetrahydrophthalic anhydride (e.g., 1,2,3,6-tetrahydrophthalic anhydride), hexahydrophthalic anhydride, or methylcyclohexene dicarboxylic anhydride. Further, as the acid anhydride-based curing agent, for example, a polyvalent carboxylic acid condensate described in JP 2011-219534 A can be used.

Examples of the episulfide compound other than the alicyclic episulfide compound include 2-[4-(2,3-episulfide propoxy)cyclohexyl]-2-[4-(2,3-epoxy propoxy)cyclohexyl]propane, bis[2-(2,3-episulfide propoxy)cyclohexyl]methane, [2-(2,3-episulfide propoxy)cyclohexyl][2-(2,3-epoxy propoxy)cyclohexyl]methane, [2-(2,3-episulfide propoxy)cyclohexyl][4-(2,3-episulfide propoxy)cyclohexyl]methane, [2-(2,3-episulfide propoxy)cyclohexyl] [4-(2,3-epoxy propoxy)cyclohexyl]methane, [2-(2,3-epoxy propoxy)cyclohexyl] [4-(2,3-episulfide propoxy)cyclohexyl]methane, bis[4-(2,3-episulfide propoxy)cyclohexyl]methane, [4-(2,3-episulfide propoxy)cyclohexyl] [4-(2,3-epoxy propoxy)cyclohexyl]methane, bis[3,5-dimethyl-4-(2,3-episulfide propoxy)cyclohexyl]methane, [3,5-dimethyl-4-(2,3-episulfide propoxy)cyclohexyl] [3,5-dimethyl-4-(2,3-epoxy propoxy)cyclohexyl]methane, a compound obtained by hydrogenating a bisphenol F type episulfide resin (hydrogenated bisphenol F type episulfide resin), a hydrogenated biphenol type episulfide resin, a hydrogenated novolac type episulfide resin (e.g. a hydrogenated phenol novolac type episulfide resin, a hydrogenated cresol novolac type episulfide resin, and a hydrogenated cresol novolac type episulfide resin of bisphenol A), a hydrogenated naphthalene type episulfide resin, and a hydrogenated epoxy resin of an episulfide resin obtained from trisphenol methane. Here, the episulfide resin is a compound in which at least one of the epoxy groups contained in the epoxy resin corresponding to the episulfide resin is substituted with an episulfide group.

Examples of the episulfide compound other than the alicyclic episulfide compound include 1,2,8,9-diepisulfide limonene, 1,2-episulfide-8,9-epoxylimonene, and 8,9-episulfide-1,2-epoxylimonene.

Furthermore, examples of the episulfide compound other than the alicyclic episulfide compound include an aromatic thioglycidyl ether-based episulfide compound [e.g., a bisphenol A type episulfide compound, a bisphenol F type episulfide compound, a biphenol type episulfide compound, a phenol novolac type episulfide compound, a cresol novolac type episulfide compound, a cresol novolac type episulfide compound of bisphenol A, a naphthalene type episulfide compound, and an episulfide compound obtained from trisphenol methane], an aliphatic thioglycidyl ether-based episulfide compound [e.g., aliphatic 2,3-episulfide propyl ether], a thioglycidyl ester-based episulfide compound, a thioglycidyl amine-based episulfide compound, and an isocyanurate compound having an episulfide group [e.g., a diallyl mono(2,3-episulfide propyl)isocyanurate compound, a monoallyl di(2,3-episulfide propyl)isocyanurate compound, and a tri(2,3-episulfide propyl)isocyanurate compound].

One type of another curable component can be used alone, or two or more types thereof can be used in combination. As another curable component, a component containing a sulfur atom is preferred from the viewpoint of a high refractive index, a high Abbe number, a balance between refractive index and Abbe number, heat resistance, and light resistance of the cured product. Specifically, a thioisocyanate compound, an episulfide compound other than the alicyclic episulfide compound, and the like are preferred.

When the curable composition of the present disclosure contains another curable component, a content (blending amount) thereof is not particularly limited, but is preferably from 10 to 1000 parts by weight, and more preferably from 30 to 500 parts by weight, relative to 100 parts by weight of the polythioether compound. More specifically, it is preferable such that a proportion of functional groups present in another curable component is from 0.1 to 1.5 equivalents per equivalent of thiol group in the polythioether compound contained in the curable composition of the present disclosure. When two or more types of the curable components are used, it is preferable that the total amount of these curable components satisfies the above range.

The curable composition of the present disclosure may contain various additives in addition to the above additives as long as the effects of the present disclosure are not impaired. As the additives described above, when a compound having a hydroxyl group, such as ethylene glycol, diethylene glycol, propylene glycol, or glycerin, is used, the reaction can proceed slowly. In addition, common additives such as amino acids, olefins such as (meth)acrylates, inorganic substances such as sulfur, silicone-based and fluorine-based antifoamers, leveling agents, silane coupling agents such as γ-glycidoxypropyltrimethoxysilane and 3-mercaptopropyltrimethoxysilane, surfactants, inorganic fillers such as alumina, flame retardants, colorants, antioxidants, ultraviolet absorbers, ion adsorbents, pigments, and mold release agents can be used as long as the viscosity and transparency are not impaired.

The curable composition of the present disclosure can be prepared by, but not particularly limited to, stirring and mixing each component described above under heating as necessary. Here, the curable composition of the present disclosure can be used as a one-part composition, which contains each component mixed beforehand and is used as is, or alternatively, used as a multi-part (for example, two-part) composition of which two or more components are separately stored and then mixed at a predetermined proportion before use. The stirring and mixing method is not particularly limited, and a known or commonly used stirring and mixing unit can be used, for example, including a mixer of various types, such as a dissolver and a homogenizer; a kneader; a roll mill; a bead mill; and a rotation/revolution stirring apparatus. In addition, after the stirring and mixing, the mixture may be defoamed under vacuum.

The viscosity of the curable composition of the present disclosure at 25°C is not particularly limited, but is preferably from 100 to 10000 mPa·s, more preferably from 200 to 9000 mPa·s, and still more preferably from 300 to 8000 mPa·s. When the viscosity at 25°C is less than 100 mPa·s, the heat resistance of the cured product tends to decrease. Meanwhile, the viscosity at 25°C exceeds 10000 mPa·s, the workability during casting tends to deteriorate, and defects due to poor casting tend to occur in the cured product. The viscosity of the curable episulfide resin composition at 25°C can be measured using a digital viscometer (model No. "DVU-EII", available from TOKIMEC INC.) under conditions: rotor: standard 1° 34' x R24; temperature: 25°C; rotation speed: from 0.5 to 10 rpm.

### Cured product

The curable composition of the present disclosure is cured, and thus a cured product having a high refractive index and high Abbe number and a good balance between the refractive index and Abbe number can be obtained with high productivity. When the curable composition of the present disclosure contains the above-described radical polymerization initiator, the cured product exhibits a high refractive index and a high Abbe number, which are higher than those described above. The heating temperature (curing temperature) during curing is not particularly limited, but is preferably from 10 to 200°C, more preferably from 20 to 190°C, and still more preferably from 30 to 180°C. The heating time (curing time) during curing is not particularly limited, but is preferably from 30 to 600 minutes, more preferably from 45 to 540 minutes, and still more preferably from 60 to 480 minutes. When the curing temperature and the curing time are lower than the lower limit of the above range, this results in insufficient curing. Conversely, when the curing temperature and the curing time are higher than the upper limit of the above range, the resin component may decompose. Thus, both deviations are not preferred. Although the curing conditions depend on various conditions, the curing conditions can be appropriately adjusted, for example, by shortening the curing time when the curing temperature is increased, or increasing the curing time when the curing temperature is reduced.

### Optical Material

A cured product formed by curing the curable composition of the present disclosure (hereinafter, sometimes referred to as "cured product of the present disclosure") exhibits a high refractive index and a high Abbe number, and also has a good balance between refractive index and Abbe number. Thus, the cured product can be suitably used in plastics for applications such as various optical materials, e.g., optical lenses such as glasses and cameras, optical fiber cables, prisms, information recording substrates, and filters. Here, the term "good balance between refractive index and Abbe number" means that the refractive index and the Abbe number are each adjusted to a satisfactory range as an optical material while the refractive index and the Abbe number exhibit high values. In the cured product of the present disclosure, the refractive index (ne) of the cured product at an e line (546.1 nm) is preferably from 1.50 to 1.80, and more preferably from 1.55 to 1.75, from the viewpoint of making the optical material and the spectacle lens thinner and effectively preventing the creation of a rainbow due to chromatic aberration. Further, the Abbe number (ve) at an e line (546.1 nm) is preferably from 30 to 60, and more preferably from 40 to 55, from the viewpoint of effectively preventing the creation of a rainbow due to chromatic aberration. As described above, the cured product of the present disclosure has good optical characteristics that simultaneously satisfy a balance between high refractive index and high Abbe number, and thus is useful as an optical film, a plastic for a spectacle lens, a transparent sealing material, or the like. The refractive index and Abbe number of the cured product are values measured using a prism coupler. Specifically, as for the cured product, the refractive index (ne) at a wavelength of 546.1 nm, the refractive index (nF') at 488 nm, and the refractive index (nC') at 643.9 nm are calculated, and substituted into Equation: Abbe number = (ne-1)/(nF'-nC') to determine the Abbe number (ve).

### Examples

Hereinafter, the present invention will be described in more detail based on examples, but the present invention is not limited by these examples.

### Measurement of ¹H-NMR

A ¹H-NMR spectrum of an alicyclic episulfide compound obtained in Synthesis Example was measured under the following conditions:
Apparatus: JEOL 400 MHz
Solvent: deuterated chloroform (containing tetramethylsilane)

### Measurement of Number Average Molecular Weight

The number average molecular weight of a polythioether compound obtained in each example was measured by GPC under the following conditions:
(Apparatus)
   Degasser Shimadzu DGU-20As
   Pump Shimadzu LC-20AD
   Autosampler Shimadzu SIL-20A
   Oven: Tosoh CO-8020
   RI detector: RID-20A
Conditions:
   Mobile phase: CHCl₃
   Mobile phase flow rate: 1 ml/min
   Column: Shodex Guard Column-KF803-KF802-KF801-KF801
   Column temperature: 40°C
   Detector temperature: 40°C
   Sample concentration: 0.2% (C%)
   Injection amount: 100 µL

### Synthesis Example 1

4-vinylcyclohexene-1,2-epoxide (239 g) and ammonium thiocyanate (293 g) were reacted in a methanol solvent (2.9 L) at 43°C for 4 hours. The reaction mixture was extracted with dichloromethane, washed with water, and concentrated. The obtained extract was purified by a silica gel column (elution solvent: dichloromethane) to obtain 170 g of a product. The product could be identified as 4-vinylcyclohexene-1,2-episulfide (compound represented by Formula(1-2) above) by NMR measurement.

FIG. 1 is a chart of a ¹H-NMR spectrum of an alicyclic episulfide compound obtained in Synthesis Example 1.

In Examples below, 4-vinylcyclohexene-1,2-episulfide, synthesized in Synthesis Example 1, was used as an alicyclic episulfide compound, and 1,8-diazabicyclo[5.4.0]undecene-7 (DBU) was used as a base.

### Example 1

4-vinylcyclohexene-1,2-episulfide (500 mg) and DBU (50 mg) were weighed into a mixing cup, and stirred with a spatula for 1 minute. The mixture was heated to 60°C and stirred for 5 minutes to become a viscous liquid. The liquid was cooled to room temperature, and the liquid gelated and solidified. The number average molecular weight (Mn) measured by GPC measurement was 11700.

### Example 2

4-vinylcyclohexene-1,2-episulfide (1000 mg), 3-mercaptopropionic acid ethyl ester (8.8 mg), and DBU (10 mg) were weighed into a mixing cup, and stirred with a spatula for 1 minute. The mixture was allowed to stand at 22°C for 44 hours, and a viscous liquid was obtained. The number average molecular weight (Mn) measured by GPC measurement was 1710.

### Example 3

4-vinylcyclohexene-1,2-episulfide (1000 mg), 3-mercaptopropionic acid ethyl ester (96 mg), and DBU (10 mg) were weighed into a mixing cup, and stirred with a spatula for 1 minute. The mixture was allowed to stand at 22°C for 30 hours, and a viscous liquid was obtained. The number average molecular weight (Mn) measured by GPC measurement was 2348.

### Example 4

4-vinylcyclohexene-1,2-episulfide (1000 mg), 3-mercaptopropionic acid ethyl ester (19 mg), and DBU (10 mg) were weighed into a mixing cup, and stirred with a spatula for 1 minute. The mixture was allowed to stand at 22°C for 30 hours, and a viscous liquid was obtained. The number average molecular weight (Mn) measured by GPC measurement was 2211.

### Example 5

4-vinylcyclohexene-1,2-episulfide (1000 mg), 3-mercaptopropionic acid ethyl ester (96 mg), and DBU (10 mg) were weighed into a mixing cup, and stirred with a spatula for 1 minute. The mixture was heated to 50°C, and a viscous liquid was obtained after 0.5 hours. The number average molecular weight (Mn) measured by GPC measurement was 1762.

### Example 6

4-vinylcyclohexene-1,2-episulfide (1000 mg), 3-mercaptopropionic acid ethyl ester (96 mg), and DBU (10 mg) were weighed into a mixing cup, and stirred with a spatula for 1 minute. The mixture was heated to 75°C, and a viscous liquid was obtained after 0.5 hours. The number average molecular weight (Mn) measured by GPC measurement was 1783.

### Example 6

4-vinylcyclohexene-1,2-episulfide (1000 mg), 3-mercaptopropionic acid ethyl ester (96 mg), and DBU (10 mg) were weighed into a mixing cup, and stirred with a spatula for 1 minute. The mixture was heated to 100°C, and a viscous liquid was obtained after 0.5 hours. The number average molecular weight (Mn) measured by GPC measurement was 2069.

### Example 7

4-vinylcyclohexene-1,2-episulfide (1000 mg), 3-mercaptopropionic acid ethyl ester (957 mg), and DBU (20 mg) were weighed into a mixing cup, and stirred with a spatula for 1 minute. The mixture was allowed to stand at 22°C for 336 hours, and a viscous liquid was obtained. The number average molecular weight (Mn) measured by GPC measurement was 741.

### Example 8

4-vinylcyclohexene-1,2-episulfide (1000 mg), 3-mercaptopropionic acid ethyl ester (96 mg), and DBU (20 mg) were weighed into a mixing cup, and stirred with a spatula for 1 minute. The mixture was allowed to stand at 22°C for 120 hours, and a viscous liquid was obtained. The number average molecular weight (Mn) measured by GPC measurement was 12478.

### Example 9

4-vinylcyclohexene-1,2-episulfide (1000 mg), 3-mercaptopropionic acid ethyl ester (96 mg), and DBU (10 mg) were weighed into a mixing cup, and stirred with a spatula for 1 minute. The mixture was allowed to stand at 22°C for 2 hours, and a viscous liquid was obtained. The number average molecular weight (Mn) measured by GPC measurement was 803.

### Example 10

A viscous liquid was obtained by the same operation as in Example 9 except that the mixture was allowed to stand for 4 hours. The number average molecular weight (Mn) measured by GPC measurement was 1248.

### Example 11

A viscous liquid was obtained by the same operation as in Example 9 except that the mixture was allowed to stand for 6 hours. The number average molecular weight (Mn) measured by GPC measurement was 1220.

### Example 12

A viscous liquid was obtained by the same operation as in Example 9 except that the mixture was allowed to stand for 24 hours. The number average molecular weight (Mn) measured by GPC measurement was 1389.

### Example 13

4-vinylcyclohexene-1,2-episulfide (1000 mg), pentaerythritol tetrakis(3-mercaptopropionate) (87 mg), and DBU (10 mg) were weighed into a mixing cup, and stirred with a spatula for 1 minute. The mixture was allowed to stand at 22°C for 2 hours, and a viscous liquid was obtained. The number average molecular weight (Mn) measured by GPC measurement was 1878.

### Example 14

A viscous liquid was obtained by the same operation as in Example 13 except that the mixture was allowed to stand for 4 hours. The number average molecular weight (Mn) measured by GPC measurement was 2221.

### Example 15

A viscous liquid was obtained by the same operation as in Example 13 except that the mixture was allowed to stand for 6 hours. The number average molecular weight (Mn) measured by GPC measurement was 2280.

### Example 16

A viscous liquid was obtained by the same operation as in Example 13 except that the mixture was allowed to stand for 24 hours. The number average molecular weight (Mn) measured by GPC measurement was 3736.

### Comparative Example 1

4-vinylcyclohexene-1,2-episulfide (900 mg) and San-Aid SI-100L: thermal acid generator (20 mg, available from SANSHIN CHEMICAL INDUSTRY CO., LTD.) were weighed into a mixing cup, and stirred with a spatula for 1 minute. The mixture was heated to 50°C, the reaction proceeded rapidly, and the mixture solidified to a rubbery substance after 1 minute.

### Comparative Example 2

4-vinylcyclohexene-1,2-episulfide (1 g) and BF₃·Et₂O (172 mg) were weighed into a mixing cup, and stirred with a spatula for 1 minute. The mixture was heated to 55°C, the reaction proceeded rapidly, and the mixture solidified after 1 minute.

Each aspect disclosed in the present specification can be combined with any other feature disclosed herein.

Note that each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims.

Variations of embodiments of the present disclosure described above are additionally described below.
[1] A method for producing a polythioether compound, the method including performing a ring-opening polymerization of an alicyclic episulfide compound in a presence of a base.
[2] The method for producing a polythioether compound according to [1], in which the ring-opening polymerization is performed in an absence of a solvent.
[3] The method for producing a polythioether compound according to [1] or [2], in which the ring-opening polymerization is performed at a reaction temperature of 30°C or higher (e.g., 40°C or higher).
[4] The method for producing a polythioether compound according to any one of [1] to [3], in which the base is an amine compound.
[5] The method for producing a polythioether compound according to any one of [1] to [4], in which the base is a strong base.
[6] The method for producing a polythioether compound according to any one of [1] to [5], in which the base is at least one of amidines selected from the group consisting of 1,8-diazabicycl[5.4.0]undecene-7, 1,5-diazabicyclo[4.3.0]nonene-5, and 6-dibutylamino-1,8-diazabicyclo[5.4.0]undecene-7, or at least one of guanidines (preferably 1,8-diazabicyclo[5.4.0]undecene-7) selected from the group consisting of 1,5,7-triazabicyclo[4.4.0]decene-5 and 7-methyl-1,5,7-triazabicyclo[4.4.0]decene-5.
[7] The method for producing a polythioether compound according to any one of [1] to [6], in which an amount of the base used is from 0.01 to 20 parts by weight (e.g., from 0.01 to 15 parts by weight, from 0.05 to 12 parts by weight, or from 0.1 to 10 parts by weight) relative to 100 parts by weight of the alicyclic episulfide compound.
[8] The method for producing a polythioether compound according to any one of [1] to [7], in which the amount of the base used is in a proportion of 0.0001 to 0.2 equivalent (e.g., 0.0005 to 0.1 equivalent, 0.001 to 0.12 equivalent, or 0.005 to 0.1 equivalent) per equivalent of alicyclic episulfide group contained in the alicyclic episulfide compound.
[9] The method for producing a polythioether compound according to any one of [1] to [8], in which the ring-opening polymerization further proceeds in the presence of a thiol compound.
[10] The method for producing a polythioether compound according to [9], in which the thiol compound is at least one (preferably thiols) selected from the group consisting of thiophenols, thiols, mercapto alcohols, hydroxy thiophenols, mercapto organic acids, and mercapto amines.
[11] The method for producing a polythioether compound according to [9] or [10], in which the thiol compound is a compound having two or more (e.g., three or more, or four or more) thiol groups in a molecule.
[12] The method for producing a polythioether compound according to any one of [9] to [11], in which an amount of the thiol compound used is from 0.1 to 200 parts by weight (e.g., from 0.5 to 150 parts by weight, or from 0.6 to 120 parts by weight) relative to 100 parts by weight of the alicyclic episulfide compound.
[13] The method for producing a polythioether compound according to any one of [9] to [12], in which the amount of the thiol compound used is such that a proportion of the thiol group is from 0.005 to 1.5 equivalents (e.g., from 0.005 to 1.2 equivalents) per equivalent of alicyclic episulfide group contained in the alicyclic episulfide compound.
[14] The method for producing a polythioether compound according to any one of [9] to [13], in which the base is used in a proportion of 0.001 equivalent or greater (e.g., 0.005 equivalent or greater, 0.01 equivalent or greater, 0.05 equivalent or greater, or 0.1 equivalent or greater) per equivalent of thiol group contained in the thiol compound.
[15] The method for producing a polythioether compound according to any one of [9] to [14], in which the base is used in a proportion of less than 1 equivalent (e.g., 0.5 equivalent or less, 0.25 equivalent or less, or 0.2 equivalent or less) per equivalent of thiol group contained in the thiol compound.
[16] The method for producing a polythioether compound according to any one of [1] to [15], in which the alicyclic episulfide compound includes a compound represented by Formula (I) below: 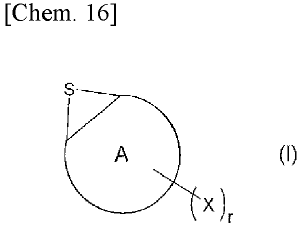 where in Formula (I), X represents a monovalent organic group; the ring A represents an alicyclic ring having from 3 to 10 carbons; r represents a natural number provided that the upper limit of r is the number of hydrogen atoms that may be present when ring A does not have X; and when r is 2 or more, 2 or more of Xs may be identical or different.
[17] A curable composition including a polythioether compound produced by the method described in any one of [1] to [16].
[18] The curable composition according to [17], in which the polythioether compound has a structure represented by Formula (II) below: 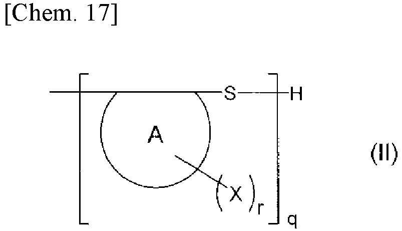 where in Formula (II), X represents a monovalent organic group; the ring A represents an alicyclic ring having from 3 to 10 carbons; r represents a natural number; provided that the upper limit of r is the number of hydrogen atoms that may be present when ring A does not have X; when r is 2 or more, 2 or more of Xs may be identical or different; q represents a natural number of 1 or greater; and X and r in a group in a square bracket may be identical or different when q is 2 or greater.
[19] The curable composition according to [17] or [18], in which a content (blending amount) of the polythioether compound in the curable composition (100 wt.%) is 3 wt.% or greater and less than 100 wt.% (e.g., from 4 to 90 wt.%, or from 5 to 80 wt.%).
[20] The curable composition according to any one of [17] to [19], further including a compound having an ethylenically unsaturated bond group.
[21] The curable composition according to any one of [17] to [20], further including a radical polymerization initiator (e.g., an organic peroxide, an azo compound, a redox initiator, a photopolymerization initiator, a thermal polymerization initiator).
[22] The curable composition according to any one of [17] to [21], in which the curable composition is a resin composition for an optical lens.
[23] The curable composition according to any one of [17] to [21], in which the curable composition is a resin composition for a spectacle lens.
[24] A cured product of the curable composition described in any one of [17] to [23].
[25] An optical lens molded from a cured product of the curable composition described in [22].
[26] A spectacle lens molded from a cured product of the curable composition described in [23].

### Industrial Applicability

According to the method of the present disclosure, it is easy to control the ring-opening polymerization reaction of the alicyclic episulfide compound, and it is possible to efficiently and economically produce a polythioether compound. The produced polythioether compound is useful as a component of a curable composition for obtaining a cured product having excellent optical characteristics with a good balance between high refraction index and high Abbe number.

## Claims

1. A method for producing a polythioether compound, the method comprising performing a ring-opening polymerization of an alicyclic episulfide compound in a presence of a base.

2. The method for producing a polythioether compound according to claim 1, wherein the ring-opening polymerization is performed in an absence of a solvent.

3. The method for producing a polythioether compound according to claim 1 or 2, wherein the ring-opening polymerization is performed at a reaction temperature of 30°C or higher.

4. The method for producing a polythioether compound according to any one of claims 1 to 3, wherein the base is an amine compound.

5. The method for producing a polythioether compound according to any one of claims 1 to 4, wherein the base is a strong base.

6. The method for producing a polythioether compound according to any one of claims 1 to 5, wherein the ring-opening polymerization further proceeds in a presence of a thiol compound.

7. The method for producing a polythioether compound according to claim 6, wherein the base is used in a proportion of 0.001 equivalent or greater and less than 1 equivalent per equivalent of thiol group contained in the thiol compound.

8. The method for producing a polythioether compound according to claim 6 or 7, wherein the thiol compound has two or more thiol groups in a molecule.

9. The method for producing a polythioether compound according to any one of claims 1 to 8, wherein the alicyclic episulfide compound includes a compound represented by Formula (I): 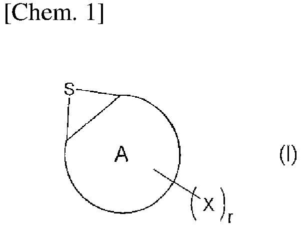 where X represents a monovalent organic group; Ring A represents an alicyclic ring having from 3 to 10 carbons; r represents a natural number, provided that an upper limit of r is the number of hydrogen atoms that may be present when ring A does not have X; and when r is 2 or greater, 2 or more of Xs may be identical or different.

10. A curable composition comprising a polythioether compound produced by the method according to any one of claims 1 to 9.

11. The curable composition according to claim 10, wherein the polythioether compound has a structure represented by Formula (II): 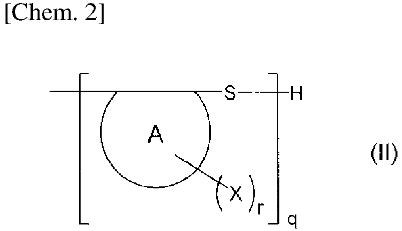 where X represents a monovalent organic group; Ring A represents an alicyclic ring having from 3 to 10 carbons; r represents a natural number, provided that an upper limit of r is the number of hydrogen atoms that may be present when ring A does not have X; when r is 2 or greater, 2 or more of Xs may be identical or different; q represents a natural number of 1 or greater; and X and r in a group in a square bracket may be identical or different when q is 2 or greater.

12. The curable composition according to claim 10 or 11, wherein the curable composition is a resin composition for an optical lens.

13. The curable composition according to claim 10 or 11, wherein the curable resin composition is a resin composition for a spectacle lens.

14. A cured product of the curable composition according to any one of claims 10 to 13.

15. An optical lens molded from a cured product of the curable composition according to claim 12.

16. A spectacle lens molded from a cured product of the curable composition according to claim 13.
